(19) Europäisches Patentamt
European Patent Office
Office européen des brevets

(11) **EP 4 637 236 A1**

(12) **EUROPEAN PATENT APPLICATION**
published in accordance with Art. 153(4) EPC

(43) Date of publication:
**22.10.2025 Bulletin 2025/43**

(21) Application number: **24759678.6**

(22) Date of filing: **20.02.2024**

(51) International Patent Classification (IPC):
***H04W 72/04*** (2023.01)

(52) Cooperative Patent Classification (CPC):
**H04W 72/04; H04W 72/1268; H04W 72/21**

(86) International application number:
**PCT/CN2024/077792**

(87) International publication number:
**WO 2024/175001 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.02.2023 CN 202310196614
31.03.2023 CN 202310379808
09.05.2023 CN 202310521949**

(71) Applicant: **Huawei Technologies Co., Ltd.
Shenzhen, Guangdong 518129 (CN)**

(72) Inventors:
• **PANG, Xu**
**Shenzhen, Guangdong 518129 (CN)**
• **XU, Rui**
**Shenzhen, Guangdong 518129 (CN)**
• **CHEN, Erkai**
**Shenzhen, Guangdong 518129 (CN)**
• **QIN, Yi**
**Shenzhen, Guangdong 518129 (CN)**
• **CAO, Youlong**
**Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **UPLINK CONTROL INFORMATION (UCI) GENERATION METHOD AND COMMUNICATION APPARATUS**

(57) Provided are a method for generating uplink control information UCI and a communication apparatus. The method includes: A terminal generates a first UCI bit sequence, where the first UCI bit sequence includes a first bit sequence and a second bit sequence; the first bit sequence corresponds to first information, and the first information is hybrid automatic repeat request HARQ feedback information; the second bit sequence corresponds to second information, and the second information indicates a physical uplink shared channel PUSCH resource used or unused in a configured grant CG period; and the first bit sequence is prior to the second bit sequence, a length of the first bit sequence is greater than or equal to 1, and a length of the second bit sequence is greater than or equal to 1. The terminal outputs the first UCI bit sequence. In the UCI bit sequence generated by using this method, the bit sequence of HARQ feedback information is positioned ahead. This helps increase a probability of complete transmission of the HARQ feedback information.

```
┌─────────────┐                    ┌──────────────────────┐
│  Terminal   │                    │ Access network device │
└──────┬──────┘                    └───────────┬──────────┘
       │                                        │
  ┌────┴──────────────────┐                     │
  │ S201: Generate a first UCI │                │
  │       bit sequence    │                     │
  └────┬──────────────────┘                     │
       │                                        │
 S202  │                                        │
 ┌─────┴───────────────────┐                    │
 │  ┌──────────────────┐   │                    │
 │  │ Process the first UCI │                    │
 │  │ bit sequence to obtain │                   │
 │  │ a second UCI bit  │   │                    │
 │  │ sequence          │   │                    │
 │  └──────────────────┘   │                    │
 │        Second UCI bit sequence                │
 │  ────────────────────────────────────────────▶│
 └─────────────────────────┘                    │
       │                                        │
```

FIG. 2

**Description**

This application claims priority to Chinese Patent Application No. 202310196614.0, filed with the China National Intellectual Property Administration on February 25, 2023 and entitled "METHOD FOR GENERATING UPLINK CONTROL INFORMATION UCI AND COMMUNICATION APPARATUS"; this application claims priority to Chinese Patent Application No. 202310379808.4, filed with the China National Intellectual Property Administration on March 31, 2023 and entitled "METHOD FOR GENERATING UPLINK CONTROL INFORMATION UCI AND COMMUNICATION APPARATUS"; and this application claims priority to Chinese Patent Application No. 202310521949.5, filed with the China National Intellectual Property Administration on May 9, 2023 and entitled "METHOD FOR GENERATING UPLINK CONTROL INFORMATION UCI AND COMMUNICATION APPARATUS", which are incorporated herein by reference in their entireties.

**TECHNICAL FIELD**

This application relates to the communication field, and in particular, to a method for generating uplink control information UCI and a communication apparatus.

**BACKGROUND**

Uplink control information (uplink control information, UCI) typically includes a plurality of types of information. For example, the UCI includes hybrid automatic repeat request (hybrid automatic repeat request, HARQ) feedback information indicating whether data transmission is successful, thereby ensuring service reliability to some extent.

In extended reality (extended Reality, XR) services, uplink data amount is substantial. Therefore, terminals executing the XR services can be configured with a plurality of PUSCH transmission resources within each configured grant (configured grant, CG) period over licensed frequency bands. However, the uplink data amount of the XR services usually changes dynamically, meaning an uplink data amount in each CG period may be different. To increase resource utilization, the terminals executing the XR services may send a specific type of UCI (collectively referred to as second information below) to an access network device based on an uplink data amount, to indicate specific CG PUSCH transmission resources unused in a CG period, so that the access network device can configure the redundant CG PUSCH transmission resources in the CG period for other terminals.

In resource-constrained scenarios, when both the HARQ feedback information and the second information are multiplexed onto a same PUSCH transmission resource, how to improve a probability of complete transmission for the HARQ feedback information is an urgent problem to be resolved.

**SUMMARY**

Embodiments of this application provide a method for generating uplink control information UCI and a communication apparatus. According to the method for generating uplink control information UCI, when both HARQ feedback information and second information are multiplexed on a PUSCH transmission resource, the bit sequence corresponding to the HARQ feedback information is positioned ahead. This helps increase a probability of complete transmission of the HARQ feedback information, and facilitate service reliability.

According to a first aspect, an embodiment of this application provides a method for generating uplink control information UCI. The method may be performed by a terminal, may be performed by a module (for example, a processor, a chip, or a chip system) used in the terminal, or may be implemented by a logical node, a logical module, or software that can implement all or some functions of the terminal. In the method for generating uplink control information UCI, a first UCI bit sequence is generated, where the first UCI bit sequence includes a first bit sequence and a second bit sequence; the first bit sequence corresponds to first information, and the first information is hybrid automatic repeat request HARQ feedback information; the second bit sequence corresponds to second information, and the second information indicates a physical uplink shared channel PUSCH resource used or unused in a configured grant CG period; and the first bit sequence is prior to the second bit sequence, a length of the first bit sequence is greater than or equal to 1, and a length of the second bit sequence is greater than or equal to 1; and the first UCI bit sequence is output.

According to the method described in the first aspect, when the terminal generates the UCI bit sequence, it can be ensured that the bit sequence corresponding to the HARQ feedback information is prior to the bit sequence corresponding to the second information, so that when resources are limited, the bit sequence corresponding to the HARQ feedback information can be preferentially mapped to a transmission resource. This helps increase a probability of complete transmission of the HARQ feedback information, and improve service stability.

In a possible implementation, first indication information is obtained, where the first indication information indicates that a priority of the second information is lower than a priority of the first information. In this possible implementation, the probability of complete transmission of the HARQ feedback information can be increased, and service transmission reliability can be ensured. In addition, the terminal may generate the first UCI bit sequence based on an indication of the first indication information, to improve flexibility of generating the UCI bit sequence by the terminal.

In a possible implementation, second indication information is obtained, where the second indication information indicates that a priority of the second information is the same as a priority of the first information. In this possible implementation, the probability of complete transmission of the HARQ feedback information can be increased, and service transmission reliability can be ensured. In addition, the terminal may generate the first UCI bit sequence based on an indication of the second indication information, to improve flexibility of generating the UCI bit sequence by the terminal.

In a possible implementation, the first UCI bit sequence further includes a third bit sequence, the third bit sequence corresponds to third information, the third information is channel state information CSI, and a length of the third bit sequence is greater than or equal to 1. In this possible implementation, in addition to the HARQ feedback information and the second information, the generated UCI may further include CSI. This helps improve service reliability and increase resource utilization, and further helps improve the transmission reliability.

In a possible implementation, the second bit sequence is prior to the third bit sequence. In this possible implementation, when the HARQ feedback information, the second information, and the CSI are all multiplexed on the PUSCH resource, a probability of complete and correct transmission of the second information is increased as much as possible when transmission of the HARQ feedback information can be completely and correctly performed, so that resource allocation can be subsequently performed based on the second information, to increase the resource utilization.

In a possible implementation, third indication information is obtained, where the third indication information indicates that the priority of the second information is higher than a priority of the third information. In this possible implementation, the probability of complete transmission of the HARQ feedback information and the second information can be increased. In addition, the terminal may generate the first UCI bit sequence based on an indication of the third indication information, to improve flexibility of generating the UCI bit sequence by the terminal.

In a possible implementation, the second bit sequence is posterior to the third bit sequence. In this possible implementation, when the HARQ feedback information, the second information, and the CSI are all multiplexed on the PUSCH resource, a probability of complete and correct transmission of the CSI is increased as much as possible when transmission of the HARQ feedback information can be completely and correctly performed, so that corresponding processing can be subsequently performed based on the CSI, to improve the service transmission reliability and reduce a transmission delay.

In a possible implementation, fourth indication information is obtained, where the fourth indication information indicates that the priority of the second information is lower than a priority of the third information. In this possible implementation, the probability of complete transmission of the HARQ feedback information and the CSI can be increased. In addition, the terminal may generate the first UCI bit sequence based on an indication of the fourth indication information, to improve flexibility of generating the UCI bit sequence by the terminal.

In a possible implementation, fifth indication information is obtained, where the fifth indication information indicates that the priority of the second information is the same as a priority of the third information. In this possible implementation, the terminal may generate the first UCI bit sequence based on an indication of the fifth indication information, to improve flexibility of generating the UCI bit sequence by the terminal.

In a possible implementation, the third bit sequence includes a fourth bit sequence and a fifth bit sequence, where the fourth bit sequence corresponds to fourth information, the fourth information is first part CSI (namely, a CSI part 1), the fifth bit sequence corresponds to fifth information, and the fifth information is second part CSI (namely, a CSI part 2). In this case, the second bit sequence is prior to the fifth bit sequence, the second bit sequence is posterior to the fourth bit sequence, a length of the fourth bit sequence is greater than or equal to 1, and a length of the fifth bit sequence is greater than or equal to 1. In this possible implementation, when the HARQ feedback information, the second information, and the CSI (including the CSI part 1 and the CSI part 2) are all multiplexed on the PUSCH resource, after complete and correct transmission of the HARQ feedback information can be performed, and a probability of complete and correct transmission of the CSI part 1 is increased, that is, a probability of obtaining real-time channel state information is increased, more reliable service transmission can be implemented, and flexibility of generating the UCI bit sequence by the terminal is improved.

In a possible implementation, the first UCI bit sequence further includes a sixth bit sequence, the sixth bit sequence corresponds to sixth information, the sixth information indicates a HARQ process, and a length of the sixth bit sequence is greater than or equal to 1. In this possible implementation, in addition to the HARQ feedback information and the second information, the generated UCI may further include information indicating a HARQ process, to help ensure correct and reliable service transmission.

In a possible implementation, the first bit sequence is posterior to the sixth bit sequence. In this possible implementation, correct and reliable service transmission can be ensured.

According to a second aspect, an embodiment of this application provides an uplink control information UCI receiving method. The method may be performed by an access network device, may be performed by a module (for example, a processor, a chip, or a chip system) used in the access network device, or may be implemented by a logical node, a logical module, or software that can implement all or some functions of the access network device. In the uplink control information UCI receiving method, a second UCI bit sequence is obtained, where the second UCI bit sequence includes a seventh bit sequence and an eighth bit sequence; the seventh bit sequence corresponds to first information, and the first information is hybrid automatic repeat request HARQ feedback information; the eighth bit sequence corresponds to second information, and the second information indicates a physical uplink shared channel PUSCH resource used or unused in a configured grant CG period; and the seventh bit sequence is prior to the eighth bit sequence, a length of the seventh bit sequence is greater than or equal to 1, and a length of the second bit sequence is greater than or equal to 1.

According to the method described in the second aspect, in the UCI bit sequence received by the access network device, the bit sequence corresponding to the HARQ feedback information is prior to the bit sequence corresponding to the second information. In this way, when resources are limited, a probability of complete transmission of the HARQ feedback information is increased, thereby improving service stability.

In a possible implementation, first indication information is sent, where the first indication information indicates that a priority of the second information is lower than a priority of the first information. In this possible implementation, the access network device may indicate a priority relationship between the HARQ feedback information and the second information by using the first indication information. This helps improve a probability of complete transmission of the HARQ feedback information, ensure service transmission reliability, and further improve flexibility of the UCI bit sequence.

In a possible implementation, second indication information is sent, where the second indication information indicates that a priority of the second information is the same as a priority of the first information. In this possible implementation, a priority relationship between the HARQ feedback information and the second information may be indicated by using the second indication information. This improves flexibility of the UCI bit sequence.

In a possible implementation, the second UCI bit sequence further includes a ninth bit sequence, the ninth bit sequence corresponds to third information, the third information is channel state information CSI, and a length of the ninth bit sequence is greater than or equal to 1. In this possible implementation, in addition to the HARQ feedback information and the second information, the received UCI may further include CSI. This helps improve service reliability and increase resource utilization, and further helps improve the transmission reliability and reduce a transmission delay.

In a possible implementation, the eighth bit sequence is prior to the ninth bit sequence. In this possible implementation, when the HARQ feedback information, the second information, and the CSI are all multiplexed on the PUSCH resource, a probability of complete and correct transmission of the second information is increased as much as possible when transmission of the HARQ feedback information can be completely and correctly performed, so that resource allocation can be subsequently performed based on the second information, to increase the resource utilization.

In a possible implementation, third indication information is sent, where the third indication information indicates that the priority of the second information is higher than a priority of the third information. In this possible implementation, a priority relationship between the second information and the third information may be indicated by using the third indication information. This increases a probability of complete transmission of the HARQ feedback information and the second information, and improves flexibility of the UCI bit sequence.

In a possible implementation, the eighth bit sequence is posterior to the ninth bit sequence. In this possible implementation, when the HARQ feedback information, the second information, and the CSI are all multiplexed on the PUSCH resource, a probability of complete and correct transmission of the CSI is increased as much as possible when transmission of the HARQ feedback information can be completely and correctly performed, so that corresponding processing can be subsequently performed based on the CSI, to improve the service transmission reliability and reduce a transmission delay.

In a possible implementation, fourth indication information is sent, where the fourth indication information indicates that the priority of the second information is lower than a priority of the third information. In this possible implementation, a priority relationship between the second information and the third information may be indicated by using the fourth indication information. This increases a probability of complete transmission of the HARQ feedback information and the CSI, and improves flexibility of the UCI bit sequence.

In a possible implementation, fifth indication information is sent, where the fifth indication information indicates that the priority of the second information is the same as a priority of the third information. In this possible implementation, a priority relationship between the second information and the third information may be indicated by using the fifth indication information. This improves flexibility of the UCI bit sequence.

In a possible implementation, the ninth bit sequence includes a tenth bit sequence and an eleventh bit sequence, where the tenth bit sequence corresponds to fourth information, the fourth information is first part CSI (namely, a CSI part 1), the eleventh bit sequence corresponds to fifth information, and the fifth information is second part CSI (namely, a CSI part 2). In this case, the eighth bit sequence is prior to the eleventh bit sequence, the eighth bit sequence is posterior to the tenth bit sequence, a length of the tenth bit sequence is greater than or equal to 1, and a length of the eleventh bit sequence is greater than or equal to 1. In this possible implementation, when the HARQ feedback information, the second information, and the CSI (including the CSI part 1 and the CSI part 2) are all multiplexed on the PUSCH resource, after complete and correct transmission of the HARQ feedback information and the CSI part 1 can be performed, and a probability of complete and correct transmission of the CSI part 1 is increased, that is, a probability of obtaining real-time channel state information is increased, more reliable service transmission can be implemented, and flexibility of generating the UCI bit sequence by the terminal is improved.

In a possible implementation, the first UCI bit sequence further includes a twelfth bit sequence, the twelfth bit sequence corresponds to sixth information, the sixth information indicates a HARQ process, and a length of the twelfth bit sequence is greater than or equal to 1. In this possible implementation, in addition to the HARQ feedback information and the second information, the received UCI may further include information indicating a HARQ process, to help ensure correct and reliable service transmission.

In a possible implementation, the seventh bit sequence is posterior to the twelfth bit sequence. In this possible implementation, correct and reliable service transmission can be ensured.

According to a third aspect, this application provides a communication apparatus. The communication apparatus includes modules/units configured to perform the method according to any one of the first aspect and the possible implementations of the first aspect.

According to a fourth aspect, this application provides a communication apparatus. The communication apparatus includes modules/units configured to perform the method according to any one of the second aspect and the possible implementations of the second aspect.

According to a fifth aspect, this application provides a communication apparatus. The apparatus may be a terminal, may be a chip, a chip system, a processor, or the like that supports the terminal in implementing the foregoing method, or may be a logical node, a logical module, or software that can implement all or some functions of the terminal. The communication apparatus may alternatively be a chip system. The communication apparatus may perform the method according to the first aspect. A function of the communication apparatus may be implemented by hardware, or may be implemented by executing corresponding software by hardware. The hardware or the software includes one or more units corresponding to the function. The unit may be software and/or hardware. For operations performed by the communication apparatus and beneficial effects thereof, refer to the method according to the first aspect and the beneficial effects thereof. Repeated parts are not described again.

According to a sixth aspect, this application provides a communication apparatus. The apparatus may be an access network device, may be a chip, a chip system, a processor, or the like that supports the access network device in implementing the foregoing method, or may be a logical node, a logical module, or software that can implement all or some functions of the access network device. The communication apparatus may alternatively be a chip system. The communication apparatus may perform the method according to the second aspect. A function of the communication apparatus may be implemented by hardware, or may be implemented by executing corresponding software by hardware. The hardware or the software includes one or more units corresponding to the function. The unit may be software and/or hardware. For operations performed by the communication apparatus and beneficial effects thereof, refer to the method according to the second aspect and the beneficial effects thereof. Repeated parts are not described again.

According to a seventh aspect, this application provides a computer-readable storage medium. The computer-readable storage medium is configured to store computer-executable instructions. When the computer-executable instructions are executed, the method performed by the terminal in the method according to the first aspect is implemented, or the method performed by the access network device in the method according to the second aspect is implemented.

According to an eighth aspect, this application provides a computer program product including a computer program. When the computer program is executed, the method performed by the terminal in the method according to the first aspect is implemented, or the method performed by the access network device in the method according to the second aspect is implemented.

According to a ninth aspect, this application provides a communication system. The communication system includes a communication apparatus (for example, a terminal) configured to perform the method according to the first aspect and a communication apparatus (for example, an access network device) configured to perform the method according to the second aspect.

**BRIEF DESCRIPTION OF DRAWINGS**

FIG. 1 is a diagram of a system architecture according to this application;
FIG. 2 is a schematic flowchart of a method for generating UCI according to this application;
FIG. 3a to FIG. 3f are diagrams of several first UCI bit sequences according to this application;
FIG. 4 is a schematic flowchart of another method for generating UCI according to this application;
FIG. 5a to FIG. 5c are diagrams of three third UCI bit sequences according to this application;

FIG. 6 is a diagram of a structure of a communication apparatus according to this application; and
FIG. 7 is a diagram of a structure of another communication apparatus according to this application.

## DESCRIPTION OF EMBODIMENTS

The following further describes specific embodiments of this application in detail with reference to accompanying drawings.

The terms "first", "second", and the like in the specification, claims, and accompanying drawings of this application are intended to distinguish between different objects, but are not intended to describe a specific order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, and "at least two (items)" means two or more than three (including three). The term "and/or" is used to describe an association relationship for describing associated objects and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

In this application, "sending information to... (for example, a terminal)" may be understood as that a destination end of the information is the terminal, and may include directly or indirectly sending the information to the terminal. "Receiving information from... (for example, a terminal)" or "receiving information from... (for example, a terminal)" may be understood as that a source end of the information is the terminal, and may include directly or indirectly receiving the information from the terminal. Information may undergo necessary processing, for example, a format change, between the source end for sending the information and the destination end. However, the destination end may understand valid information from the source end. Similar descriptions in this application may be understood similarly, and details are not described herein.

To better understand embodiments of this application, the following first describes a system architecture in embodiments of this application.

Embodiments of this application may be applied to a wireless communication system such as a communication system that is evolved after 5G, for example, a long term evolution (long term evolution, LTE) system, a 5th generation mobile communication (5th generation mobile communication, 5G) system, or a 6th generation mobile communication (6th generation mobile communication, 6G) system, a satellite communication system, or a short-range communication system. The wireless communication system mentioned in embodiments of this application includes but is not limited to three application scenarios of a 5G/6G mobile communication system: enhanced mobile broadband (enhanced mobile broadband, eMBB), ultra-reliable low-latency communication (ultra-reliable low-latency communication, URLLC), massive machine type communication (massive machine type of communication, mMTC), a long range (long range, LoRa) internet of things system, or an internet of vehicles system. The wireless communication system may include one or more access network devices and one or more terminal devices.

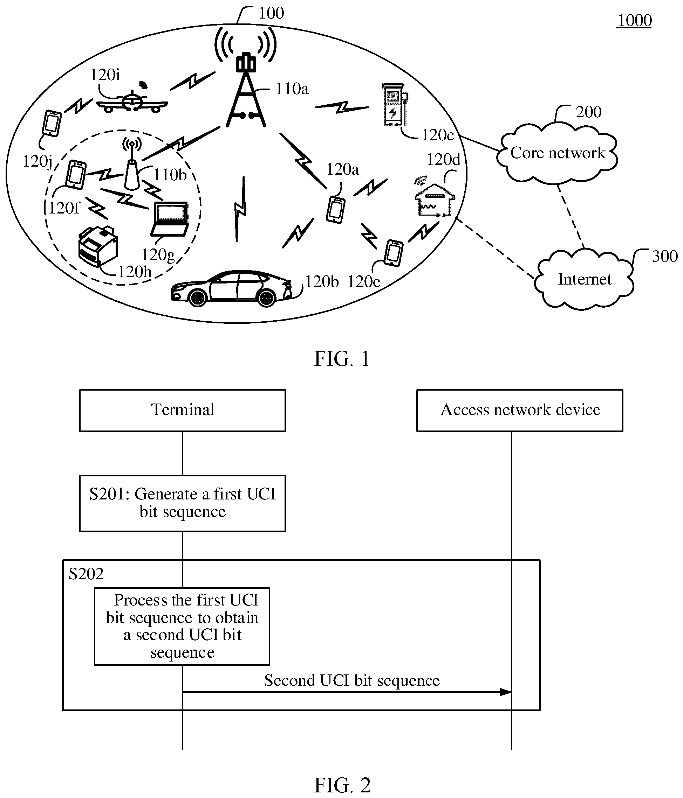

The following uses a system architecture shown in FIG. 1 as an example for description. As shown in FIG. 1, a communication system 1000 includes a radio access network (radio access network, RAN) 100 and a core network (core network, CN) 200. The RAN 100 includes at least one access network device (for example, 110a and 110b in FIG. 1, collectively referred to as 110) and at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the access network device 110 in a wireless manner. The access network device 110 is connected to the core network 200 in a wireless or wired manner. A core network device in the core network 200 and the access network device 110 in the RAN 100 may be different physical devices, or may be a same physical device that integrates a logical function of the core network and a logical function of the radio access network.

It should be noted that the RAN 100 may be a cellular system related to the 3rd generation partnership project (3rd generation partnership project, 3GPP), for example, a 4G mobile communication system, a 5G mobile communication system, or an evolved system after 5G (for example, a 6G mobile communication system). The RAN 100 may alternatively be an open access network (open RAN, O-RAN or ORAN), a cloud radio access network (cloud radio access network, CRAN), or the like. The RAN 100 may alternatively be a communication system integrating two or more of the foregoing systems. It should be noted that quantities of access network devices and terminal devices in FIG. 1 are merely examples, and should not be considered as a specific limitation on this application. A terminal device and a network device that are related to the system architecture are described in detail below.

1. Terminal device

The terminal device may also be referred to as a user equipment (user equipment, UE), a mobile station (mobile station, MS), a mobile terminal (mobile terminal, MT), or the like, and is a device that provides a user with voice or data connectivity, or may be an internet of things device. For example, the terminal device includes a handheld device, a vehicle-mounted device, and the like that have a wireless connection function. Currently, the terminal device may be: a mobile phone, a tablet computer, a notebook computer, a palmtop computer, a mobile internet device (mobile internet device, MID), a wearable device (for example, a smartwatch, a smart band, or a pedometer), a vehicle-mounted device (for example, a vehicle, a bicycle, an electric vehicle, an airplane, a ship, a train, or a high-speed railway), a satellite terminal, a virtual reality (virtual reality, VR) device, an augmented reality (augmented reality, AR) device, a smart point of sale (point of sale, POS) machine, a customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an unmanned aerial vehicle, or an airplane), or the like. The terminal device may alternatively be another device having a terminal function. For example, the terminal device may alternatively be a device that functions as a terminal in D2D communication.
A device form of the terminal is not limited in embodiments of this application. An apparatus configured to implement a function of the terminal device may be a terminal device, or may be an apparatus that can support the terminal device in implementing the function, for example, a chip system. The apparatus may be mounted in a terminal device or used with the terminal device. In this embodiment of this application, the chip system may include a chip, or may include a chip and another discrete device.

2. Access network device

The access network device is a node in a radio access network (radio access network, RAN), and may also be referred to as a network device, or may also be referred to as a RAN node (or device). The access network device is configured to help the terminal implement radio access. A plurality of access network devices 110 in the communication system 1000 may be nodes of a same type, or may be nodes of different types. In some scenarios, roles of the access network device 110 and the terminal 120 are relative. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. The access network device 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.
In a possible scenario, the access network device may be a base station (base station), an evolved NodeB (evolved NodeB, eNodeB), a transmitting and receiving point (transmitting and receiving point, TRP), a transmitting point (transmitting point, TP), a next generation NodeB (next generation NodeB, gNB), a next generation base station in a 6th generation (6th generation, 6G) mobile communication system, a base station in a future mobile communication system, a satellite, an integrated access and backhaul (integrated access and backhaul, IAB) node, or an access network device in a mobile switching center-based non-terrestrial communication network (non-terrestrial network, NTN) communication system, that is, the network device may be deployed on a high-altitude platform, a satellite, or the like. The access network device may be a macro base station (for example, 110a in FIG. 1), a micro base station or an indoor station (for example, 110b in FIG. 1), a relay node or a donor node, or a radio controller in a CRAN scenario. The access network device may alternatively be a device that functions as a base station in device to device (device to device, D2D) communication, internet of vehicles communication, unmanned aerial vehicle communication, or machine communication. Optionally, the access network device may alternatively be a server, a wearable device, a vehicle, a vehicle-mounted device, or the like. For example, an access network device in a vehicle to everything (vehicle to everything, V2X) technology may be a road side unit (road side unit, RSU).
All or some functions of the access network device in this application may alternatively be implemented via a software function running on hardware, or may be implemented via a virtualization function instantiated on a platform (for example, a cloud platform). The access network device in this application may alternatively be a logical node, a logical module, or software that can implement all or some functions of the access network device.

In another possible scenario, a plurality of access network devices cooperate to assist the terminal in implementing radio access, and different access network devices respectively implement some functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including a CU node and a DU node. In addition, the CU may be classified into an access network device in an access network RAN, or the CU may be classified into an access network device in the core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, a form of the access network device is not limited, and an apparatus configured to implement a function of the access network device may be an access network device, or may be an apparatus that can support the access network device in implementing the function, for example, a chip system. The apparatus may be mounted in the access network device or used with the access network device.

To facilitate understanding of content of this solution, the following further explains and describes some terms in embodiments of this application, to facilitate understanding by a person skilled in the art. This part is merely for ease of understanding, and cannot be considered as a specific limitation on this application.

1. Extended reality (extended reality, XR)

XR refers to the integration of reality and virtuality using computers to create a virtual environment that allows human-computer interaction. Typically, XR includes virtual reality (virtual reality, VR) and augmented reality (augmented reality, AR). (1) A service model (also referred to as a domain model (domain model)) is usually for periodic transmission based on a frame rate. The service model indicates how associated data is associatively collaborated in service logic. (2) The transmission involves a large amount of data, and a size of frame data amount is variable.

2. Configured grant (configured grant, CG)

CG refers to a mechanism in which some resources (namely, physical uplink shared channel (physical uplink shared channel, PUSCH) resources mentioned in this application) are preconfigured for terminals on uplink. Subsequently, when a terminal has to-be-transmitted uplink data, the terminal does not need to send, to an access network device, a scheduling request for uplink data transmission, instead, the terminal can use the preconfigured PUSCH resources for uplink transmission, to reduce an uplink transmission delay. Generally, one transport block (transport block, TB) and at least one PUSCH resource (one or more PUSCH resources) may be configured in one CG period.

It should be noted that duration of a CG period is equal to a CG periodicity. The PUSCH resource in the CG period mentioned in this application may also be referred to as a CG uplink resource, a CG PUSCH resource, a CG PUSCH transmission resource, a CG PUSCH transmission occasion, or the like in another solution.

3. Uplink control information (uplink control information, UCI)

Typically, the UCI may include one or more of the following information: configured grant uplink control information (configured grant uplink control information, CG-UCI), hybrid automatic repeat request (hybrid automatic repeat request, HARQ) feedback information, and channel state information (channel state information, CSI).

The HARQ feedback information is ACK information (indicating that data is successfully received) or NACK information (indicating that data fails to be received or no data is received). Therefore, the HARQ feedback information is related to service stability. The CSI includes CSI part 1 and CSI part 2. A payload size of the CSI part 1 is fixed, and is used to determine an information bit of the CSI part 2. Transmission of the CSI part 1 is usually before transmission of the CSI part 2. State information of a transmission channel between two communication parties may be reflected by using the CSI, and the transmission channel is processed based on the CSI. This helps implement high-reliability and low-latency transmission between the two communication parties. Therefore, the CSI is related to the service reliability. The CG-UCI includes information (for example, a HARQ process number) indicating a HARQ process, and the HARQ process number facilitates correct and reliable transmission of a service.

It should be noted that, transmission of the UCI may be performed on a physical uplink control channel (physical uplink control channel, PUCCH), or may be performed on a PUSCH. The following descriptions of this application are mainly for a case in which the UCI is multiplexed on the PUSCH (that is, transmission of the UCI is performed via the PUSCH).

Because an XR service usually has a large amount of to-be-transmitted data, in one CG period, a plurality of PUSCH resources may be configured for a terminal executing the XR service. However, the amount of to-be-transmitted data of the XR service is variable (that is, the amount of data may dynamically change), and there may be some PUSCH resources unused in some CG periods. In this case, to avoid a waste of resources, the terminal may send second information to an access network device to indicate a PUSCH resource used or unused in a CG period. In this case, if PUSCH resources are limited (that is, the PUSCH resources are insufficient for transmission of all UCI bit sequences), and the UCI includes a plurality of pieces of information including the second information and HARQ feedback information, how to generate a UCI bit sequence is an urgent problem to be resolved.

This application provides a method for generating UCI. When PUSCH resources are limited, if UCI includes a plurality of pieces of information including second information and HARQ feedback information, a terminal preferentially maps a bit sequence corresponding to the HARQ feedback information, to improve a probability of complete transmission of the HARQ feedback information, and facilitate service reliability. The following further describes the method for generating UCI and a communication apparatus with reference to the accompanying drawings.

It may be understood that in this application, an example in which an access network device and the terminal are used as entities for performing interaction is used for illustration. However, the entities for performing interaction are not limited in this application. For example, the access network device in the method provided in this application may be a chip, a chip system, or a processor used in the access network device, or may be a logical node, a logical module, or software that can implement all or some functions of access network devices. The terminal in the method provided in this application may be a chip, a chip system, or a processor used in the terminal, or may be a logical node, a logical module, or software that can implement all or some of functions of the terminal.

FIG. 2 is a schematic flowchart of a method for generating UCI according to an embodiment of this application.

S201: A terminal generates a first UCI bit sequence.

The first UCI bit sequence includes a first bit sequence and a second bit sequence; the first bit sequence corresponds to first information, and the first information is HARQ feedback information; the second bit sequence corresponds to second information, and the second information indicates a PUSCH resource used or unused in a CG period; and the first bit sequence is prior to the second bit sequence, a length of the first bit sequence is greater than or equal to 1, and a length of the second bit sequence is greater than or equal to 1.

S202: The terminal outputs the first UCI bit sequence.

Specific manners of S201 and S202 are described in detail below.

In S201, the terminal determines that UCI to be sent includes the HARQ feedback information and the second information that indicates a PUSCH resource used or unused in a CG period. When the UCI is multiplexed on the PUSCH, in the first UCI bit sequence generated by the terminal, the first bit sequence corresponding to the HARQ feedback information is prior to the second bit sequence corresponding to the second information.

It should be understood that, that a bit sequence A is prior to a bit sequence B in the first UCI bit sequence mentioned in this application may include at least one or more of the following several understandings: (1) A location of the bit sequence A is prior to a location of the bit sequence B in the first UCI bit sequence. (2) When a bit index value of a last bit of the bit sequence A in the first UCI bit sequence is less than a bit index value of a $1^{st}$ bit of the bit sequence B in the first UCI bit sequence, it is considered that the bit sequence A is prior to the bit sequence B. (3) When resource mapping is performed on the first UCI bit sequence, if the bit sequence A is mapped before the bit sequence B, it is considered that the bit sequence A is prior to the bit sequence B. (4) In the first UCI bit sequence, if a priority of the bit sequence A is higher than a priority of the bit sequence B, it is considered that the bit sequence A is prior to the bit sequence B. (5) During transmission of the first UCI bit sequence, if a reserved resource corresponding to the bit sequence A (a resource configured for transmission of the bit sequence A) cannot be used for the bit sequence B, it is considered that the bit sequence A is prior to the bit sequence B. Similarly, that a bit sequence B is posterior to a bit sequence A in the first UCI bit sequence mentioned in this application may include at least one or more of the following understandings: (1) A location of the bit sequence B is posterior to a location of the bit sequence A in the first UCI bit sequence. (2) When a bit index value of a $1^{st}$ bit of the bit sequence B in the first UCI bit sequence is greater than a bit index value of a last bit of the bit sequence A in the first UCI bit sequence, it is considered that the bit sequence B is posterior to the bit sequence A. (3) When resource mapping is performed on the first UCI bit sequence, if the bit sequence B is mapped after the bit sequence A, it is considered that the bit sequence B is posterior to the bit sequence A. (4) In the first UCI bit sequence, if a priority of the bit sequence B is lower than a priority of the bit sequence A, it is considered that the bit sequence B is posterior to the bit sequence A. (5) During transmission, if a reserved resource corresponding to the bit sequence A (a resource configured for transmission of the bit sequence A) cannot be used for the bit sequence B, it is considered that the bit sequence B is posterior to the bit sequence A. This is applicable throughout this specification.

A first UCI bit sequence generated by the terminal varies with different information included in the UCI. The first UCI bit sequence generated by the terminal is schematically described below by using the following several cases.

Case 1: The UCI includes the HARQ feedback information and the second information. In this case, the first UCI bit sequence includes the first bit sequence corresponding to the HARQ feedback information and the second bit sequence corresponding to the second information.

In Implementation 1 of Case 1, by default (or as specified in a communication protocol, which is the same throughout this specification), the information in descending order of priorities is: the HARQ feedback information, then the second information. Alternatively, it is understood as that the bit sequences in a default order from front to back are: the first bit sequence, then the second bit sequence. Further, the terminal generates a first UCI bit sequence based on the priority of the HARQ feedback information being higher than the priority of the second information. The bit sequences in the first UCI bit sequence in an order from front to back are: the first bit sequence, then the second bit sequence.

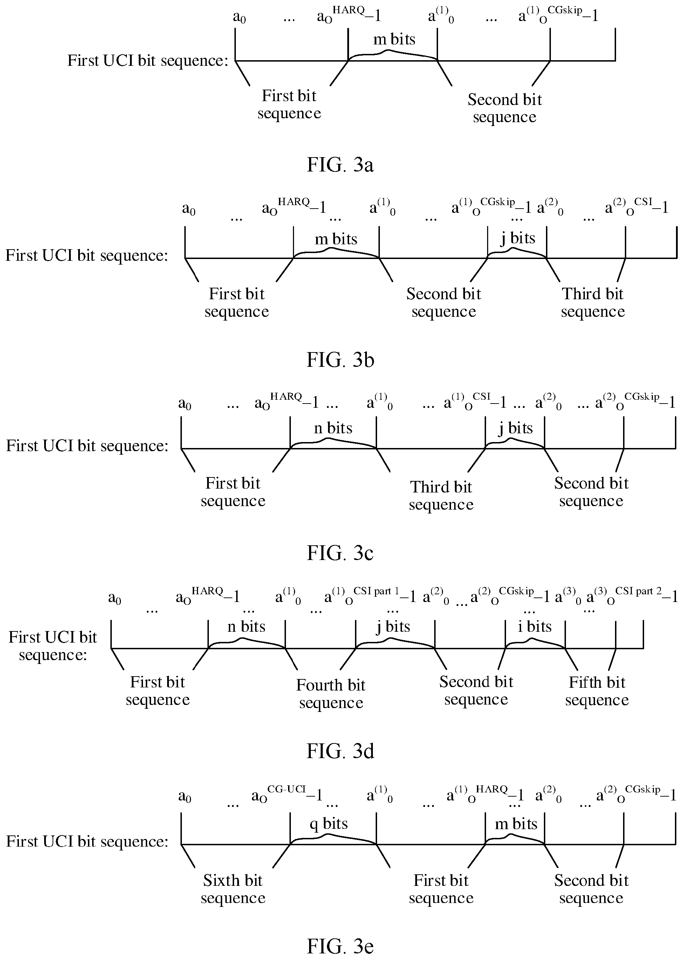

For example, in Example 1, the terminal determines that the UCI to be sent includes the HARQ feedback information and the second information. The first bit sequence corresponding to the HARQ feedback information includes $O^{HARQ}$ bits, and the second bit corresponding to the second information includes $O^{CGskip}$ bits. In this case, the terminal generates a first UCI bit sequence shown in FIG. 3a. The first bit sequence corresponding to the HARQ feedback information is $a_0, ... , a_{O^{HARQ}} - 1$. The second bit sequence corresponding to the second information is

$$a_0^{(1)}, ..., a_{O^{CGskip}-1}^{(1)} - 1$$

. The first bit sequence and the second bit sequence are separated by m bits, where m is an integer greater than or equal to 0. When m is equal to 0, a last bit of the first bit sequence and a 1st bit of the second bit sequence are consecutive (that is, bit index values are consecutive, and $a_0^{(1)}$ is $a_{O^{HARQ}}$).

In Implementation 2 of Case 1, the terminal obtains first indication information, where the first indication information indicates that a priority of the second information is lower than a priority of the HARQ feedback information. Further, the terminal generates a first UCI bit sequence based on the first indication information.

The first indication information may be carried in a radio resource control (radio resource control, RRC) signaling message, or may be carried in a downlink control information (downlink control information, DCI) message. This is not specifically limited in this application.

For example, in Example 2, after the terminal establishes a communication connection to an access network device, the access network device sends the first indication information to the terminal by using an RRC signaling message. The first indication information includes that a priority index value of the HARQ feedback information is an index value 1, and a priority index value of the second information is an index value 0. A larger priority index value indicates a higher priority. To be specific, when the index value 1 is greater than the index value 0, the first indication information indicates that the priority of the HARQ feedback information is higher than the priority of the second information. In this case, the terminal generates a first UCI bit sequence shown in FIG. 3a. The first UCI bit sequence generated in this example is shown as the first UCI bit sequence in Example 1. Details are not described herein again.

In Implementation 3 of Case 1, the terminal obtains second indication information, where the second indication information indicates that a priority of the second information is the same as a priority of the HARQ feedback information. Further, the terminal generates a first UCI bit sequence based on the second indication information.

The second indication information may be carried in an RRC signaling message, or may be carried in a DCI message. This is not specifically limited in this application.

For example, in Example 3, after the terminal establishes a communication connection to an access network device, the access network device sends the second indication information to the terminal by using an RRC signaling message. The second indication information includes that a priority index value of the HARQ feedback information is an index value 1, and a priority index value of the second information is an index value 1. A larger priority index value indicates a higher priority. To be specific, when both the priority index value of the HARQ feedback information and the priority index value of the second information are index values 1, the first indication information indicates that the priority of the HARQ feedback information is the same as the priority of the second information. In this case, as shown in Example 1, the terminal generates a first UCI bit sequence shown in FIG. 3a based on the priority of the HARQ feedback information being higher than the priority of the second information by default. The first UCI bit sequence generated in this example is shown as the first UCI bit sequence in Example 1. Details are not described herein again.

With reference to Implementations 1 to 3 of Case 1, the terminal may further receive a first parameter from the access network device. The first parameter indicates that the second information and the HARQ feedback information are jointly encoded when a PUCCH resource in a PUCCH group overlaps a CG-PUSCH resource (which may be understood as a case in which the PUCCH resource overlaps the CG-PUSCH resource, the overlapping PUCCH resource is discarded, the overlapping PUSCH resource is reserved, and therefore UCI carried on the PUCCH needs to be multiplexed on the overlapping PUSCH resource). The first parameter may be carried in an RRC signaling message or a DCI message. The first parameter and the first indication information (or the second indication information) may be carried in a same message, or may be carried in different messages. This is not specifically limited in this application.

When the second information and the HARQ feedback information are indicated to be jointly encoded, in a generated first UCI sequence, a last bit of the first bit sequence corresponding to the HARQ feedback information and a 1$^{st}$ bit of the second bit sequence corresponding to the second information are consecutive (that is, bit index values are consecutive). For example, m in Example 1 is equal to 0, and the first UCI bit sequence is $a_0$, $a_1$, ..., $a_{OHARQ}$ - 1, $a_{OHARQ}$, $a_{OHARQ}$ + 1, ..., $a_{OHARQ+CGskip}$- 1. The first bit sequence corresponding to the HARQ feedback information includes $O^{HARQ}$ bits, and the first bit sequence is $a_0$, $a_1$, ..., $a_{OHARQ}$ - 1. The second bit sequence corresponding to the second information includes $O^{CGskip}$ bits, and the second bit sequence is $a_{OHARQ}$, $a_{OHARQ}$ + 1, ... , $a_{OHARQ+CGskip}$ - 1.

In Case 1, when receiving the first parameter from the access network device, the terminal may further receive a fifth parameter (for example, a parameter uci-MuxWithDiffPrio) from the access network device. The fifth parameter indicates to separately multiplex high-priority HARQ feedback information (referred to as HP-HARQ feedback information for short below) and low-priority HARQ feedback information (referred to as LP-HARQ feedback information for short below) of a primary PUCCH group on the PUCCH or the PUSCH. In this case, if the priority of the second information is the same as a priority of the HP-HARQ feedback information, the second information and the HP-HARQ feedback information are jointly encoded, and the LP-HARQ feedback information is independently encoded; or if the priority of the second information is the same as a priority of the LP-HARQ feedback information, the HP-HARQ feedback information is independently encoded, and the second information and the LP-HARQ feedback information are jointly encoded.

For example, after the terminal establishes the communication connection to the access network device, the access network device sends indication information to the terminal by using an RRC signaling message. If the indication information includes HARQ feedback information with a priority index value of 1 (namely, the HP-HARQ feedback information), HARQ feedback information with a priority index value of 0 (namely, the LP-HARQ feedback information), and the second information with the priority index value of 1, the first UCI bit sequence generated by the terminal includes: a bit sequence corresponding to joint encoding of the second information and the HP-HARQ feedback information: $a_0$, $a_1$, ... , $a_{OHP-HARQ}$ - 1, $a_{OHP-HARQ}$, $a_{OHP-HARQ}$ + 1, ..., $a_{OHP-HARQ+CGskip}$ - 1, and a bit sequence corresponding to independent encoding of the LP-HARQ feedback information: $a_0^{(1)}, ..., a_{OLP-HARQ}^{(1)} - 1$ . If the indication information includes HARQ feedback information with a priority index value of 1 (namely, the HP-HARQ feedback information), HARQ feedback information with a priority index value of 0 (namely, the LP-HARQ feedback information), and the second information with the priority index value of 0, the first UCI bit sequence generated by the terminal includes: a bit sequence corresponding to independent encoding of the HP-HARQ feedback information: $a_0$, $a_1$, ..., $a_{OHP-HARQ}$ - 1, and a bit sequence corresponding to joint encoding of the LP-HARQ feedback information and the second information:

$$a_0^{(1)}, ..., a_{OLP-HARQ}^{(1)} - 1, a_{OLP-HARQ}^{(1)}, a_{OLP-HARQ}^{(1)} + 1, ..., a_{OLP-HARQ+CGskip}^{(1)} - 1 .$$

Case 2: The UCI includes the HARQ feedback information, the second information, and third information, where the third information is CSI. In this case, the first UCI bit sequence includes the first bit sequence corresponding to the HARQ feedback information, the second bit sequence corresponding to the second information, and a third bit sequence corresponding to the CSI. Lengths of the first bit sequence, the second bit sequence, and the third bit sequence are all greater than or equal to 1.

In Implementation 1 of Case 2, the information in descending order of priorities is: the HARQ feedback information, the second information, and the CSI by default. Alternatively, it is understood as that the bit sequences in an order from front to back are: the first bit sequence, the second bit sequence, and the third bit sequence by default. Further, the terminal generates a first UCI bit sequence based on the priority of the HARQ feedback information being higher than the priority of the second information and the priority of the second information being higher than the priority of the CSI. The bit sequences in the first UCI bit sequence in an order from front to back are: the first bit sequence, the second bit sequence, and the third bit sequence.

For example, in Example 4, the terminal determines that the UCI to be sent includes the HARQ feedback information, the second information, and the CSI. The first bit sequence corresponding to the HARQ feedback information includes $O^{HARQ}$ bits, the second bit corresponding to the second information includes $O^{CGskip}$ bits, and the third bit sequence corresponding to the CSI includes $O^{CSI}$ bits. In this case, the terminal generates a first UCI bit sequence shown in FIG. 3b. The first bit sequence corresponding to the HARQ feedback information is $a_0$, ... , $a_{OHARQ}$ - 1 . The second bit sequence corresponding to the second information is $a_0^{(1)}, ..., a_{OCGskip}^{(1)} - 1$ . The third bit sequence corresponding to the CSI is $a_0^{(2)}, ..., a_{OCSI}^{(2)} - 1$ . The first bit sequence and the second bit sequence are separated by m bits, where m is an integer greater than or equal to 0. When m is equal to 0, a last bit of the first bit sequence and a 1st bit of the second bit sequence are consecutive (that is, bit index values are consecutive, and $a_0^{(1)}$ is $a_{OHARQ}$). The second bit sequence and the third bit sequence are separated by j bits, where j is an integer greater than or equal to 1.

In Implementation 2 of Case 2, the terminal obtains third indication information, where the third indication information indicates that a priority of the second information is higher than a priority of the CSI. Further, the terminal generates a first UCI bit sequence based on the third indication information. It should be noted that the priority of the CSI is the same as a priority of a PUSCH used for transmission of the CSI.

The third indication information may be carried in an RRC signaling message, or may be carried in a DCI message. This is not specifically limited in this application. It may be understood that, when Implementation 2 of Case 2 is implemented in combination with Implementation 3 of Case 1, the third indication information and the second indication information may be carried in a same message or different messages. This is not specifically limited in this application.

For example, in Example 5, after the terminal establishes a communication connection to an access network device, if a priority index value of the PUSCH corresponding to the CSI is an index value 0, and the access network device sends the second indication information and the third indication information to the terminal by using an RRC signaling message, the second indication information indicates that the priority index value of the HARQ feedback information is an index value 1, and the third indication information indicates that a priority index value of the second information is an index value 1. In this case, the terminal determines that the priority of the second information is higher than the priority of the CSI, and generates a first UCI bit sequence shown in FIG. 3b based on a priority of the HARQ feedback information being higher than the priority of the second information by default. The first UCI bit sequence generated in this example is shown as the first UCI bit sequence in Example 4. Details are not described herein again.

With reference to Implementation 1 and Implementation 2 of Case 2, the terminal may receive a first parameter from the access network device. The first parameter indicates that the second information and the HARQ feedback information are jointly encoded when a PUCCH resource in a PUCCH group overlaps a CG-PUSCH resource. The first parameter may be carried in an RRC signaling message or a DCI message. It may be understood that, in this case, after receiving the first parameter from the access network device, the terminal may generate a first UCI sequence with reference to a corresponding step in Case 1 (that is, an execution step in which the terminal generates the first UCI sequence after receiving the first parameter in Case 1). Details are not described herein again.

With reference to Implementation 1 and Implementation 2 of Case 2, when receiving the first parameter from the access network device, the terminal may further receive a fifth parameter (for example, a parameter uci-MuxWithDiffPrio) from the access network device. The fifth parameter indicates to separately multiplex HP-HARQ feedback information and LP-HARQ feedback information of a primary PUCCH group on a PUCCH or the PUSCH. In this case, if the priority of the second information is the same as a priority of the HP-HARQ feedback information, the second information and the HP-HARQ feedback information are jointly encoded, and the LP-HARQ feedback information is independently encoded; or if the priority of the second information is the same as a priority of the LP-HARQ feedback information, the HP-HARQ feedback information is independently encoded, and the second information and the LP-HARQ feedback information are jointly encoded.

For example, after the terminal establishes the communication connection to the access network device, the access network device sends indication information to the terminal by using an RRC signaling message. If the indication information includes HARQ feedback information with a priority index value of 1 (namely, the HP-HARQ feedback information), HARQ feedback information with a priority index value of 0 (namely, the LP-HARQ feedback information), the priority index value of the second information being 1, and the third information with a priority index value of 0, the first UCI bit sequence generated by the terminal includes: a bit sequence corresponding to joint encoding of the second information and the HP-HARQ feedback information: $a_0, a_1, ..., a_{OHP-HARQ}$ - 1, $a_{OHP-HARQ}$, $a_{OHP-HARQ}$ + 1, ... , $a_{OHP-HARQ+CGskip}$ - 1, a bit sequence corresponding to independent encoding of the LP-HARQ feedback information: $a_0^{(1)}, ..., a_{OLP-HARQ}^{(1)} - 1$, and a bit sequence corresponding to the third information: $a_0^{(2)}, ..., a_{OCSI}^{(2)} - 1$. If the indication information includes HARQ feedback information with a priority index value of 1 (namely, the HP-HARQ feedback information), HARQ feedback information with a priority index value of 0 (namely, the LP-HARQ feedback information), the priority index value of the second information being 1, and the third information with a priority index value of 1, the first UCI bit sequence generated by the terminal includes: a bit sequence corresponding to joint encoding of the second information and the HP-HARQ feedback information: $a_0, a_1, ... , a_{OHP-HARQ}$ - 1, $a_{OHP-HARQ}$, $a_{OHP-HARQ}$ + 1, ..., $a_{OHP-HARQ+CGskip}$ - 1, a bit sequence corresponding to the third information: $a_0^{(1)}, ..., a_{OCSI}^{(1)} - 1$, and a bit sequence corresponding to independent encoding of the LP-HARQ feedback information: $a_0^{(2)}, ..., a_{O_{LP-HARQ}-1}^{(2)}$. If the indication information includes HARQ feedback information with a priority index value of 1 (namely, the HP-HARQ feedback information), HARQ feedback information with a priority index value of 0 (namely, the LP-HARQ feedback information), the second information with the priority index value of 0, and the third information with a priority index value of 0, the first UCI bit sequence generated by the terminal includes: a bit sequence corresponding to independent encoding of the HP-HARQ feedback information: $a_0, a_1, ..., a_{O_{HP-HARQ}}$ - 1, a bit sequence corresponding to joint encoding of the LP-HARQ feedback information and the second information:

$$a_0^{(1)}, ..., a_{O_{LP-HARQ}-1}^{(1)}, a_{O_{LP-HARQ}}^{(1)}, a_{O_{LP-HARQ}+1}^{(1)}, ..., a_{O_{LP-HARQ+CGskip}-1}^{(1)}$$, and a bit sequence corresponding to the third information: $a_0^{(2)}, ..., a_{O_{CSI}}^{(2)} - 1$.

In Implementation 3 of Case 2, the information in descending order of priorities is: the HARQ feedback information, the CSI, and the second information by default. Alternatively, it is understood as that the bit sequences in an order from front to back are: the first bit sequence, the third bit sequence, and the second bit sequence by default. Further, the terminal generates a first UCI bit sequence based on the priority of the HARQ feedback information being higher than the priority of the CSI and the priority of the CSI being higher than the priority of the second information. The bit sequences in the first UCI bit sequence in an order from front to back are: the first bit sequence, the third bit sequence, and the second bit sequence.

For example, in Example 6, the terminal determines that the UCI to be sent includes the HARQ feedback information, the second information, and the CSI. The first bit sequence corresponding to the HARQ feedback information includes $O^{HARQ}$ bits, the second bit corresponding to the second information includes $O^{CGskip}$ bits, and the third bit sequence corresponding to the CSI includes $O^{CSI}$ bits. In this case, the terminal generates a first UCI bit sequence shown in FIG. 3c. The first bit sequence corresponding to the HARQ feedback information is $a_0, ..., a_{O_{HARQ}}$ - 1. The third bit sequence corresponding to the CSI is $a_0^{(1)}, ..., a_{O_{CSI}}^{(1)} - 1$. The second bit sequence corresponding to the second information is $a_0^{(2)}, ..., a_{O_{CGskip}}^{(2)} - 1$. The first bit sequence and the third bit sequence are separated by n bits, where n is an integer greater than or equal to 1. The third bit sequence and the second bit sequence are separated by j bits, where j is an integer greater than or equal to 1.

In Implementation 4 of Case 2, the terminal obtains fourth indication information, where the fourth indication information indicates that a priority of the second information is lower than a priority of the CSI. Further, the terminal generates a first UCI bit sequence based on the fourth indication information.

The fourth indication information may be carried in an RRC signaling message, or may be carried in a DCI message. This is not specifically limited in this application. It may be understood that, when Implementation 4 of Case 2 is implemented in combination with Implementation 2 of Case 1, the fourth indication information and the first indication information may be carried in a same message or different messages. This is not specifically limited in this application.

For example, in Example 7, after the terminal establishes a communication connection to an access network device, if a priority index value of the PUSCH corresponding to the CSI is an index value 1, and the access network device sends the first indication information and the fourth indication information to the terminal by using an RRC signaling message, the first indication information indicates that the priority index value of the HARQ feedback information is an index value 1, and the fourth indication information indicates that a priority index value of the second information is an index value 0. In this case, the terminal determines that the priority of the second information is lower than the priority of the CSI, and generates a first UCI bit sequence shown in FIG. 3c based on a priority of the HARQ feedback information being higher than the priority of the CSI by default. The first UCI bit sequence generated in this example is shown as the first UCI bit sequence in Example 6. Details are not described herein again.

In Implementation 5 of Case 2, the terminal obtains fifth indication information, where the fifth indication information indicates that a priority of the second information is the same as a priority of the CSI. Further, the terminal generates a first UCI bit sequence based on the fifth indication information.

The fifth indication information may be carried in an RRC signaling message, or may be carried in a DCI message. This is not specifically limited in this application. It may be understood that, when Implementation 5 of Case 2 is implemented in combination with Implementation 2 of Case 1, the fifth indication information and the first indication information may be carried in a same message or different messages. When Implementation 5 of Case 2 is implemented in combination with Implementation 3 of Case 1, the fifth indication information and the second indication information may be carried in a same message or different messages. This is not specifically limited in this application.

For example, in Example 8, after the terminal establishes a communication connection to an access network device, if a priority index value of the PUSCH corresponding to the CSI is an index value 0, and the access network device sends the first indication information and the fifth indication information to the terminal by using an RRC signaling message, the first indication information indicates that the priority index value of the HARQ feedback information is an index value 1, and the fifth indication information indicates that a priority index value of the second information is an index value 0. In this case, the first indication information indicates that the priority of the HARQ feedback information is higher than the priority of the second information, and the fifth indication information indicates that the priority of the second information is the same as the priority of the CSI. In this case, the terminal generates a first UCI sequence shown in FIG. 3b if the priority of the second information is higher than the priority of the CSI by default; or the terminal generates a first UCI sequence shown in FIG. 3c if the priority of the second information is lower than the priority of the CSI by default.

For example, in Example 9, after the terminal establishes a communication connection to an access network device, if a priority index value of the PUSCH corresponding to the CSI is an index value 1, and the access network device sends the second indication information and the fifth indication information to the terminal by using an RRC signaling message, the second indication information indicates that the priority index value of the HARQ feedback information is an index value 1, and the fifth indication information indicates that a priority index value of the second information is an index value 1. In this case, the second indication information indicates that the priority of the HARQ feedback information is the same as the priority of the second information, and the fifth indication information indicates that the priority of the second information is the same as the priority of the CSI. In this case, the terminal generates a first UCI sequence shown in FIG. 3b if the priority of the HARQ feedback information is higher than the priority of the second information and the priority of the second information is higher than the priority of the CSI by default; or the terminal generates a first UCI sequence shown in FIG. 3c if the priority of the second information is lower than the priority of the CSI and the priority of the CSI is lower than the priority of the HARQ feedback information by default.

It may be understood that, with reference to Implementation 5 of Case 2 in which the priority of the second information is higher than the priority of the CSI by default, that is, the terminal may determine, based on the fifth indication information in Embodiment 5, that the priority of the second information is higher than the priority of the CSI, the terminal may receive a first parameter and/or a fifth parameter from the access network device. The first parameter indicates that the second information and the HARQ feedback information are jointly encoded when a PUCCH resource in a PUCCH group overlaps a CG-PUSCH resource. The fifth parameter indicates to separately multiplex HP-HARQ feedback information and LP-HARQ feedback information of a primary PUCCH group on a PUCCH or the PUSCH. When the terminal receives the first parameter and the fifth parameter from the access network device, if the priority of the second information is the same as a priority of the HP-HARQ feedback information, the second information and the HP-HARQ feedback information are jointly encoded, and the LP-HARQ feedback information is independently encoded; or if the priority of the second information is the same as a priority of the LP-HARQ feedback information, the HP-HARQ feedback information is independently encoded, and the second information and the LP-HARQ feedback information are jointly encoded. In this case, for descriptions of a first UCI bit sequence generated by the terminal, refer to the descriptions of the first UCI bit sequence generated when the terminal receives the first parameter and the fifth parameter from the access network device in Implementation 1 and Implementation 2 of Case 2. Details are not described herein again.

Case 3: The UCI includes the HARQ feedback information, the second information, fourth information (namely, first part CSI, also referred to as a CSI part 1), and fifth information (namely, second part CSI, also referred to as a CSI part 2). In this case, the first UCI bit sequence includes the first bit sequence corresponding to the HARQ feedback information, the second bit sequence corresponding to the second information, a fourth bit sequence corresponding to the CSI part 1, and a fifth bit sequence corresponding to the CSI part 2. Lengths of the first bit sequence, the second bit sequence, the fourth bit sequence, and the fifth bit sequence are all greater than or equal to 1.

In Implementation 1 of Case 3, the information in descending order of priorities is: the HARQ feedback information, the CSI part 1, the second information, and the CSI part 2 by default. Alternatively, it is understood as that the bit sequences in an order from front to back are: the first bit sequence, the fourth bit sequence, the second bit sequence, and the fifth bit sequence by default. Further, the terminal generates a first UCI bit sequence based on the priority of the HARQ feedback information being higher than the priority of the CSI part 1, the priority of the CSI part 1 being higher than the priority of the second information, and the priority of the second information being higher than the priority of the CSI part 2. The bit sequences in the first UCI bit sequence in an order from front to back are: the first bit sequence, the fourth bit sequence, the second bit sequence, and the fifth bit sequence.

For example, in Example 10, the terminal determines that the UCI to be sent includes the HARQ feedback information, the CSI part 1, the second information, and the CSI part 2. The first bit sequence corresponding to the HARQ feedback information includes $O^{HARQ}$ bits, the fourth bit sequence corresponding to the CSI part 1 includes $O^{CSI\,part\,1}$ bits, the second bit corresponding to the second information includes $O^{CGskip}$ bits, and the fifth bit sequence corresponding to the CSI part 2 includes $O^{CSI\,part\,2}$ bits. In this case, the terminal generates a first UCI bit sequence shown in FIG. 3d. The first bit sequence corresponding to the HARQ feedback information is $a_0, \ldots, a_{O^{HARQ}} - 1$. The fourth bit sequence corresponding to the CSI part 1 is $a_0^{(1)}, \ldots, a_{O^{CSI\,part\,1}}^{(1)} - 1$. The second bit sequence corresponding to the second information is $a_0^{(2)}, ..., a_{O\text{CGskip}}^{(2)} - 1$ . The fifth bit sequence corresponding to the CSI part 2 is

$a_0^{(3)}, ..., a_{O\text{CSI part 2}}^{(3)} - 1$ . The first bit sequence and the fourth bit sequence are separated by n bits, where n is an integer greater than or equal to 1. The fourth bit sequence and the second bit sequence are separated by j bits, where j is an integer greater than or equal to 1. The second bit sequence and the fifth bit sequence are separated by i bits, where i is an integer greater than or equal to 1.

In Implementation 2 of Case 3, the terminal obtains sixth indication information, where the sixth indication information indicates that a priority of the second information is the same as a priority of the CSI part 1 (or a priority of the CSI part 2). Further, the terminal generates a first UCI bit sequence based on the sixth indication information.

The sixth indication information may be carried in an RRC signaling message, or may be carried in a DCI message. This is not specifically limited in this application. It may be understood that, when Implementation 3 of Case 3 is implemented in combination with Implementation 2 of Case 1, the sixth indication information and the first indication information may be carried in a same message or different messages. When Implementation 3 of Case 3 is implemented in combination with Implementation 3 of Case 1, the sixth indication information and the second indication information may be carried in a same message or different messages. This is not specifically limited in this application.

For example, in Example 11, after the terminal establishes a communication connection to an access network device, if a priority index value of the PUSCH corresponding to the CSI part 1 and the CSI part 2 is an index value 0, and the access network device sends the first indication information and the sixth indication information to the terminal by using an RRC signaling message, the first indication information indicates that the priority index value of the HARQ feedback information is an index value 1, and the sixth indication information indicates that a priority index value of the second information is an index value 0. In this case, the first indication information indicates that the priority of the HARQ feedback information is higher than the priority of the second information, and the sixth indication information indicates that the priority of the second information is the same as the priority of the CSI part 1 (or the priority of the CSI part 2). In this case, the terminal generates a first UCI sequence shown in FIG. 3d based on the priority of the CSI part 1 being higher than the priority of the second information and the priority of the second information being higher than the priority of the CSI part 2 by default.

For example, in Example 12, after the terminal establishes a communication connection to an access network device, if a priority index value of the PUSCH corresponding to the CSI part 1 and the CSI part 2 is an index value 1, and the access network device sends the second indication information and the sixth indication information to the terminal by using an RRC signaling message, the second indication information indicates that the priority index value of the HARQ feedback information is an index value 1, and the sixth indication information indicates that a priority index value of the second information is an index value 1. In this case, the second indication information indicates that the priority of the HARQ feedback information is the same as the priority of the second information, and the sixth indication information indicates that the priority of the second information is the same as the priority of the CSI part 1 (or the priority of the CSI part 2). In this case, as shown in Example 10, the terminal generates a first UCI sequence shown in FIG. 3d based on the information in descending order of priorities being: the HARQ feedback information, the CSI part 1, the second information, and the CSI part 2 by default.

Case 4: The UCI includes the HARQ feedback information, the second information, and sixth information (information indicating a HARQ process, for example, CG-UCI in the following). In this case, the first UCI bit sequence includes the first bit sequence corresponding to the HARQ feedback information, the second bit sequence corresponding to the second information, and a sixth bit sequence corresponding to the CG-UCI. Lengths of the first bit sequence, the second bit sequence, and the sixth bit sequence are all greater than or equal to 1.

In Implementation 1 of Case 4, the information in descending order of priorities is: the CG-UCI, the HARQ feedback information, and the second information by default. Alternatively, it is understood as that the bit sequences in an order from front to back are: the sixth bit sequence, the first bit sequence, and the second bit sequence by default. Further, the terminal generates a first UCI bit sequence based on the priority of the CG-UCI being higher than the priority of the HARQ feedback information and the priority of the HARQ feedback information being higher than the priority of the second information. The bit sequences in the first UCI bit sequence in an order from front to back are: the sixth bit sequence, the first bit sequence, and the second bit sequence.

For example, in Example 13, the terminal determines that the UCI to be sent includes the CG-UCI, the HARQ feedback information, and the second information. The sixth bit sequence corresponding to the CG-UCI includes $O^{CG-UCI}$ bits, the first bit sequence corresponding to the HARQ feedback information includes $O^{HARQ}$ bits, and the second bit corresponding to the second information includes $O^{CGskip}$ bits. In this case, the terminal generates a first UCI bit sequence shown in FIG. 3e. The sixth bit sequence corresponding to the CG-UCI is $a_0, ..., a_{O\text{CG\_UCI}} - 1$. The first bit sequence corresponding to the HARQ feedback information is $a_0^{(1)}, ..., a_{O\text{HARQ}}^{(1)} - 1$ . The second bit sequence corresponding to the second information is $a_0^{(2)}, \dots, a_{O_{CGskip}}^{(2)} - 1$. The sixth bit sequence and the first bit sequence are separated by q bits, where q is an integer greater than or equal to 0. When q is equal to 0, a last bit of the sixth bit sequence and a $1^{st}$ bit of the first bit sequence are consecutive (that is, bit index values are consecutive, and $a_0^{(1)}$ is $a_{O_{CG\_UCI}}$). The first bit sequence and the second bit sequence are separated by m bits, where m is an integer greater than or equal to 0. When m is equal to 0, a last bit of the first bit sequence and a $1^{st}$ bit of the second bit sequence are consecutive (that is, bit index values are consecutive, and $a_0^{(2)}$ is $a_{O_{HARQ}}^{(1)}$).

With reference to Implementation 1 of Case 4, the terminal may further receive a second parameter from the access network device. The second parameter indicates that the CG-UCI and the HARQ feedback information are jointly encoded when a PUCCH resource in a PUCCH group overlaps a CG-PUSCH. The second parameter may be carried in an RRC signaling message or a DCI message. When the CG-UCI and the HARQ feedback information are indicated to be jointly encoded, in a generated first UCI sequence, a last bit of the sixth bit sequence corresponding to the CG-UCI and a $1^{st}$ bit of the first bit sequence corresponding to the HARQ feedback information are consecutive (that is, bit index values are consecutive). For example, q in Example 1 of Case 4 is equal to 0, and the first UCI bit sequence is $a_0$, $a_1$, ..., $a_{O_{CG-UCI}} - 1$, $a_{O_{CG-UCI}}$, $a_{O_{CG-UCI}} + 1$, ..., $a_{O_{CG-UCI+HARQ}} - 1$. The sixth bit sequence corresponding to the CG-UCI includes $O^{CG-UCI}$ bits, and the sixth bit sequence is $a_0$, $a_1$, ..., $a_{O_{CG-UCI}} - 1$. The first bit sequence corresponding to the HARQ feedback information includes $O^{HARQ}$ bits, and the first bit sequence is $a_{O_{CG-UCI}}$, $a_{O_{CG-UCI}} + 1$, ..., $a_{O_{CG-UCI+HARQ}} - 1$.

With reference to Implementation 1 of Case 4, the terminal may further receive a first parameter from the access network device. The first parameter indicates that the second information and the HARQ feedback information are jointly encoded when a PUCCH resource in a PUCCH group overlaps a CG-PUSCH (which may be understood as that the UCI is multiplexed on the PUSCH). The first parameter may be carried in an RRC signaling message or a DCI message. When the second information and the HARQ feedback information are indicated to be jointly encoded, in a generated first UCI sequence, a last bit of the first bit sequence corresponding to the HARQ feedback information and a $1^{st}$ bit of the second bit sequence corresponding to the second information are consecutive (that is, bit index values are consecutive).

For example, the terminal receives the first parameter and the second parameter from the access network device, that is, the CG-UCI, the HARQ feedback information, and the second information are jointly encoded. In Example 13, both q and m are equal to 0, and the first UCI bit sequence is $a_0$, $a_1$, ..., $a_{O_{CG-UCI}} - 1$, $a_{O_{CG-UCI}}$, $a_{O_{CG-UCI}} + 1$, ..., $a_{O_{CG-UCI+HARQ}} - 1$, $a_{O_{CG-UCI+HARQ}}$, $a_{O_{CG-UCI+HARQ}} + 1$, ..., $a_{O_{CG-UCI+HARQ+CGskip}} - 1$. The sixth bit sequence corresponding to the CG-UCI includes $O^{CG-UCI}$ bits, and the sixth bit sequence is $a_0$, $a_1$, ..., $a_{O_{CG-UCI}} - 1$. The first bit sequence corresponding to the HARQ feedback information includes $O^{HARQ}$ bits, and the first bit sequence is $a_{O_{CG-UCI}}$, $a_{O_{CG-UCI}} + 1$, ..., $a_{O_{CG-UCI+HARQ}} - 1$. The second bit sequence corresponding to the second information includes $O^{CGskip}$ bits, and the second bit sequence is $a_{O_{CG-UCI+HARQ}}$, $a_{O_{CG-UCI+HARQ}} + 1$, ..., $a_{O_{CG-UCI+HARQ+CGskip}} - 1$.

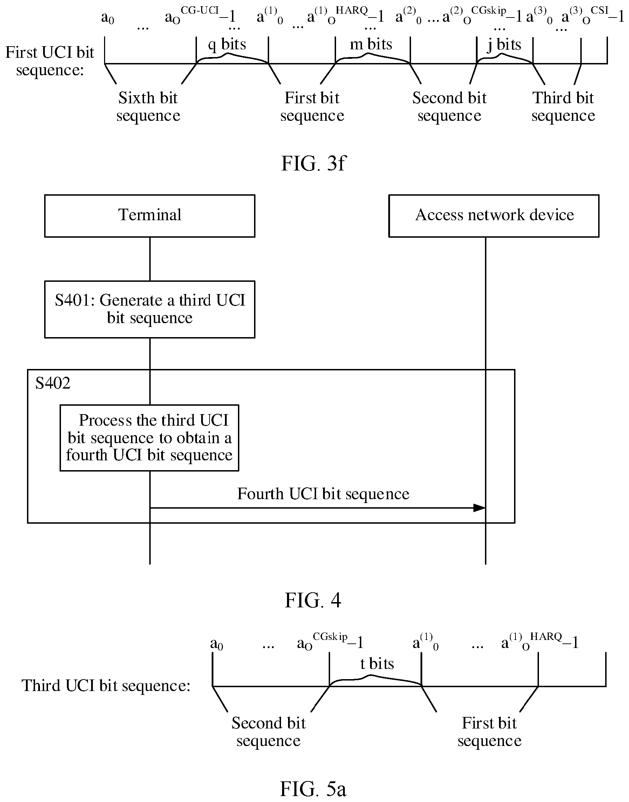

It should be noted that: 1. In the foregoing cases (namely, Case 1 to Case 4), unless otherwise specified or there is a logic conflict, terms and/or descriptions in implementations of different cases are consistent and may be mutually referenced, and technical features in different embodiments may be combined based on an internal logical relationship thereof, to form a new case. For example, Implementation 1 of Case 4 is combined with Implementation 1 of Case 2 (or Implementation 2 of Case 2). When the terminal needs to send the CG-UCI, the HARQ feedback information, the second information, and the CSI, the terminal may determine that the information in descending order of priorities is: the CG-UCI, the HARQ feedback information, the second information, and the CSI, to generate a first UCI bit sequence shown in FIG. 3f. 2. In the foregoing cases, if any piece of information is not sent, a corresponding bit sequence in the first UCI is omitted. For example, in Case 4, if the terminal determines that the CG-UCI does not need to be sent, the terminal omits, in the first UCI bit sequence, a location of the sixth bit sequence corresponding to the CG-UCI, to generate the first UCI bit sequence shown in FIG. 3a. 3. The information mentioned in Case 1 to Case 4 is applicable to both a licensed frequency band and an unlicensed frequency band.

In S202, after generating the first UCI bit sequence, the terminal outputs the first UCI bit sequence to a next processing module, so that the next processing module processes the first UCI bit sequence, and sends a second UCI bit sequence obtained through final processing to the access network device.

In other words, after generating the first UCI bit sequence, a UCI bit sequence generation module of the terminal sends the first UCI bit sequence to a cyclic redundancy check (cyclic redundancy check, CRC) adding module to add a CRC to the first UCI bit sequence; a channel coding module performs channel coding on the first UCI bit sequence processed by the CRC adding module; a modulation module modulates the first UCI bit sequence processed by the channel coding module; and a resource mapping module maps the first UCI bit sequence processed by the modulation module to a PUSCH resource, that is, sends the processed first UCI bit sequence (referred to as the second UCI bit sequence in this application) to the access network device by using the PUSCH resource. It may be understood that, when PUSCH resources are limited, the resource mapping module sequentially performs mapping based on an order of bit sequences from front to back in the first UCI bit sequence, and in this case, a bit sequence in the back of the first UCI bit sequence may not be sent to the access network device. In other words, when resources are limited, the access network device may receive a part of the processed first UCI bit sequence.

It should be noted that: 1. The bit sequences in the first UCI bit sequence are processed to obtain bit sequences in the second UCI bit sequence. For example, the first bit sequence is processed to obtain a seventh bit sequence in the second UCI bit sequence, the second bit sequence is processed to obtain an eighth bit sequence in the second UCI bit sequence, the third bit sequence is processed to obtain a ninth bit sequence in the second UCI bit sequence, the fourth bit sequence is processed to obtain a tenth bit sequence in the second UCI bit sequence, the fifth bit sequence is processed to obtain an eleventh bit sequence in the second UCI bit sequence, and the sixth bit sequence is processed to obtain a twelfth bit sequence in the second UCI bit sequence. 2. When the CRC adding module adds a CRC to each bit sequence in the first UCI bit sequence, only one CRC is added to bit sequences on which joint encoding is performed, and each bit sequence on which independent encoding is performed (namely, a bit sequence on which joint encoding is not indicated to be performed) corresponds to one CRC. For example, in the first UCI bit sequence shown in FIG. 3b, if the first bit sequence and the second bit sequence are jointly encoded, the first bit sequence and the second bit sequence jointly correspond to one CRC, and the third bit sequence corresponds to one CRC. Further, after receiving the second UCI bit sequence, the access network device performs inverse processing on the second UCI bit sequence. For example, after receiving the second UCI bit sequence, the access network device demodulates the second UCI bit sequence through a demodulation module, and then performs, through a CRC removal module, CRC removal processing on the second UCI bit sequence processed through the demodulation module.

In conclusion, when the UCI bit sequence is generated by using the method shown in FIG. 2, it can be ensured that the bit sequence corresponding to the HARQ feedback information is prior to the bit sequence corresponding to the second information, so that when resources are limited, the bit sequence corresponding to the HARQ feedback information can be preferentially mapped to a transmission resource. This helps increase a probability of complete transmission of the HARQ feedback information, and improve service stability.

This application further provides another method for generating UCI. When PUSCH resources are limited, if UCI includes a plurality of pieces of information including second information and HARQ feedback information, a terminal preferentially maps a bit sequence corresponding to the second information, to improve a probability of complete transmission of the second information, and further increase resource utilization. The following further describes the method for generating UCI and a communication apparatus with reference to the accompanying drawings.

FIG. 4 is a schematic flowchart of another method for generating UCI according to an embodiment of this application.

S401: A terminal generates a third UCI bit sequence.

The third UCI bit sequence includes a first bit sequence and a second bit sequence; the first bit sequence corresponds to first information, and the first information is HARQ feedback information; the second bit sequence corresponds to second information, and the second information indicates a PUSCH resource used or unused in a CG period; and the second bit sequence is prior to the first bit sequence, a length of the first bit sequence is greater than or equal to 1, and a length of the second bit sequence is greater than or equal to 1.

S402: The terminal outputs the third UCI bit sequence.

Specific manners of S401 and S402 are described in detail below.

In S401, the terminal determines that UCI to be sent includes the HARQ feedback information and the second information that indicates a PUSCH resource used or unused in a CG period. When the UCI is multiplexed on the PUSCH, in the third UCI bit sequence generated by the terminal, the second bit sequence corresponding to the second information is prior to the first bit sequence corresponding to the HARQ feedback information.

A third UCI bit sequence generated by the terminal varies with different information included in the UCI. The third UCI bit sequence generated by the terminal is schematically described below by using the following several cases.

Case 1: The UCI includes the HARQ feedback information and the second information. In this case, the third UCI bit sequence includes the second bit sequence corresponding to the second information and the first bit sequence corresponding to the HARQ feedback information.

In Implementation 1 of Case 1, the information in descending order of priorities is: the second information and the HARQ feedback information by default (or understood as being specified in a communication protocol, which is applicable throughout this specification). Alternatively, it is understood as that the bit sequences in an order from front to back are: the second bit sequence and the first bit sequence by default. Further, the terminal generates a third UCI bit sequence based on the priority of the second information being higher than the priority of the HARQ feedback information. The bit sequences in the third UCI bit sequence in an order from front to back are: the second bit sequence and the first bit sequence.

For example, in Example 1, the terminal determines that the UCI to be sent includes the HARQ feedback information and the second information. The first bit sequence corresponding to the HARQ feedback information includes $O^{HARQ}$ bits, and the second bit corresponding to the second information includes $O^{CGskip}$ bits. In this case, the terminal generates a third UCI bit sequence shown in FIG. 5a. The second bit sequence corresponding to the second information is

$a_0, ..., a_{OCGskip}$ - 1. The first bit sequence corresponding to the HARQ feedback information is $a_0^{(1)}, ..., a_{O^{HARQ}-1}^{(1)}$. The second bit sequence and the first bit sequence are separated by t bits, where t is an integer greater than or equal to 0. When t is equal to 0, a last bit of the second bit sequence and a 1st bit of the first bit sequence are consecutive (that is, bit index values are consecutive, and $a_0^{(1)}$ is $a_{OCGskip}$).

In Implementation 2 of Case 1, the terminal obtains seventh indication information, where the seventh indication information indicates that a priority of the second information is higher than a priority of the HARQ feedback information. Further, the terminal generates a third UCI bit sequence based on the eighth indication information.

The seventh indication information may be carried in an RRC signaling message, or may be carried in a DCI message. This is not specifically limited in this application.

For example, in Example 2, after the terminal establishes a communication connection to an access network device, the access network device sends the seventh indication information to the terminal by using an RRC signaling message. The seventh indication information includes that a priority index value of the HARQ feedback information is an index value 0, and a priority index value of the second information is an index value 1. A larger priority index value indicates a higher priority. To be specific, when the index value 1 is greater than the index value 0, the seventh indication information indicates that the priority of the second information is higher than the priority of the HARQ feedback information. In this case, the terminal generates a third UCI bit sequence shown in FIG. 5a. The third UCI bit sequence generated in this example is shown as the third UCI bit sequence in Example 1. Details are not described herein again.

In Implementation 3 of Case 1, the terminal obtains eighth indication information, where the eighth indication information indicates that a priority of the second information is the same as a priority of the HARQ feedback information. Further, the terminal generates a third UCI bit sequence based on the eighth indication information.

The eighth indication information may be carried in an RRC signaling message, or may be carried in a DCI message. This is not specifically limited in this application.

For example, in Example 3, after the terminal establishes a communication connection to an access network device, the access network device sends the eighth indication information to the terminal by using an RRC signaling message. The eighth indication information includes that a priority index value of the HARQ feedback information is an index value 1, and a priority index value of the second information is an index value 1. A larger priority index value indicates a higher priority. To be specific, when both the priority index value of the HARQ feedback information and the priority index value of the second information are index values 1, the eighth indication information indicates that the priority of the HARQ feedback information is the same as the priority of the second information. In this case, as shown in Example 1, the terminal generates a third UCI bit sequence shown in FIG. 5a based on the priority of the second information being higher than the priority of the HARQ feedback information by default. The third UCI bit sequence generated in this example is shown as the third UCI bit sequence in Example 1. Details are not described herein again.

With reference to Implementation 1 to Implementation 3 of Case 1, the terminal may further receive a first parameter from the access network device. The first parameter indicates that the second information and the HARQ feedback information are jointly encoded when a PUCCH resource in a PUCCH group overlaps a CG-PUSCH resource. The first parameter may be carried in an RRC signaling message or a DCI message. The first parameter and the seventh indication information (or the eighth indication information) may be carried in a same message, or may be carried in different messages. This is not specifically limited in this application.

When the second information and the HARQ feedback information are indicated to be jointly encoded, in a generated third UCI sequence, a last bit of the second bit sequence corresponding to the second information and a 1st bit of the first bit sequence corresponding to the HARQ feedback information are consecutive (that is, bit index values are consecutive). For example, t in Example 1 is equal to 0, and the third UCI bit sequence is $a_0, a_1, ... , a_{OCGskip}$ - 1, $a_{OCGskip}, a_{OCGskip}$ + 1$, ..., a_{OCGskip+HARQ}$ - 1. The second bit sequence corresponding to the second information includes $O^{CGSkip}$ - 1 bits, and the second bit sequence is $a_0, a_1, ... , a_{OCGskip}$ - 1. The first bit sequence corresponding to the HARQ feedback information includes $O^{HARQ}$ bits, and the first bit sequence is $a_{OCGskip}, a_{OCGskip}$ + 1, ..., $a_{OCGskip+HARQ}$ - 1.

In a possible implementation of Case 1, the second information further indicates a HARQ process.

Case 2: A case in which there is sixth information (information indicating a HARQ process, for example, CG-UCI in the following) whose transmission is performed on the PUSCH may be understood as that the UCI includes the HARQ feedback information, the second information, and the CG-UCI. In this case, the third UCI bit sequence includes the first bit sequence corresponding to the HARQ feedback information, the second bit sequence corresponding to the second information, and a sixth bit sequence corresponding to the CG-UCI. Lengths of the first bit sequence, the second bit sequence, and the sixth bit sequence are all greater than or equal to 1.

In Implementation 1 of Case 2, the information in descending order of priorities is: the second information, the CG-UCI, and the HARQ feedback information by default. Alternatively, it is understood as that the bit sequences in an order from front to back are: the second bit sequence, the sixth bit sequence, and the first bit sequence by default. Further, the terminal generates a third UCI bit sequence based on the priority of the second information being higher than the priority of the CG-UCI and the priority of the CG-UCI being higher than the priority of the HARQ feedback information. The bit sequences in the third UCI bit sequence in an order from front to back are: the second bit sequence, the sixth bit sequence, and the first bit sequence.

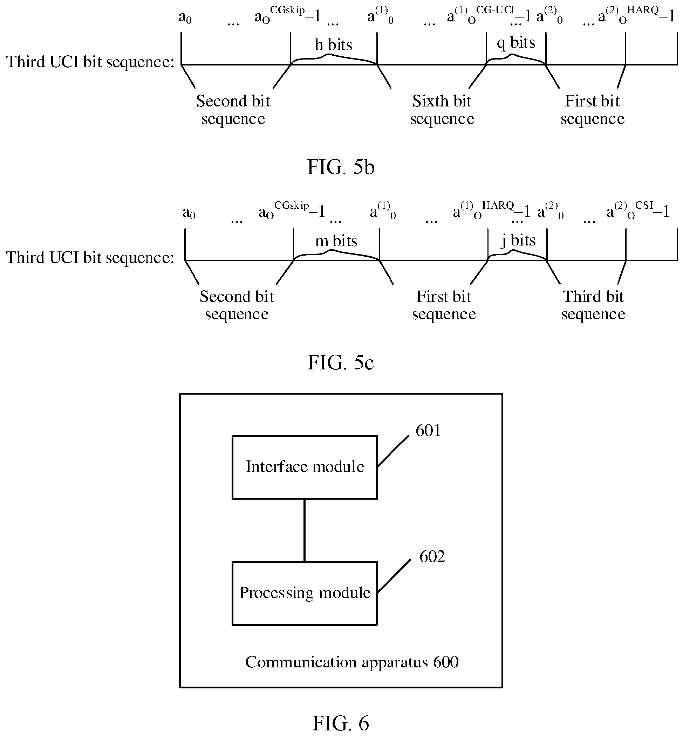

For example, in Example 4, the terminal determines that the UCI to be sent includes the CG-UCI, the HARQ feedback information, and the second information. The sixth bit sequence corresponding to the CG-UCI includes $O^{CG-UCI}$ bits, the first bit sequence corresponding to the HARQ feedback information includes $O^{HARQ}$ bits, and the second bit corresponding to the second information includes $O^{CGskip}$ bits. In this case, the terminal generates a third UCI bit sequence shown in FIG. 5b. The second bit sequence corresponding to the second information is $a_0, ..., a_{O^{CGskig}} - 1$. The sixth bit sequence corresponding to the CG-UCI is $a_0^{(1)}, ..., a_{O^{CG-UCI}}^{(1)} - 1$. The first bit sequence corresponding to the HARQ feedback information is $a_0^{(2)}, ..., a_{O^{HARQ}}^{(2)} - 1$. The second bit sequence and the sixth bit sequence are separated by h bits, where h is an integer greater than or equal to 0. When h is equal to 0, a last bit of the second bit sequence and a 1st bit of the sixth bit sequence are consecutive (that is, bit index values are consecutive, and $a_0^{(1)}$ is $a_{O^{CGskip}}$). The sixth bit sequence and the first bit sequence are separated by q bits, where q is an integer greater than or equal to 0. When q is equal to 0, a last bit of the sixth bit sequence and a 1st bit of the first bit sequence are consecutive (that is, bit index values are consecutive, and $a_0^{(2)}$ is $a_{O^{CG-UCI}}^{(1)}$).

In Implementation 2 of Case 2, the terminal obtains the seventh indication information and ninth indication information, where the seventh indication information indicates that a priority of the second information is higher than a priority of the HARQ feedback information, and the ninth indication information indicates that a priority of the CG-UCI is the same as the priority of the second information or indicates that a priority of the CG-UCI is the same as a priority of the first information. Further, the terminal generates a third UCI bit sequence based on the seventh indication information and the ninth indication information.

The seventh indication information and the ninth indication information may be carried in an RRC signaling message, or may be carried in a DCI message. This is not specifically limited in this application. It may be understood that, the seventh indication information and the ninth indication information may be carried in a same message or different messages. This is not specifically limited in this application.

For example, in Example 5, after the terminal establishes a communication connection to an access network device, if the access network device sends the seventh indication information and the ninth indication information to the terminal by using an RRC signaling message, the seventh indication information indicates that the priority index value of the second information is an index value 1, and the priority index value of the HARQ feedback information is an index value 0. If the ninth indication information indicates that a priority index value of the CG-UCI is 1, the ninth indication information indicates that the priority of the CG-UCI is the same as the priority of the second information. If the ninth indication information indicates that a priority index value of the CG-UCI is 0, the ninth indication information indicates that the priority of the CG-UCI is the same as the priority of the HARQ feedback information. In this case, the terminal generates a third UCI bit sequence shown in FIG. 5b based on the priority of the second information being higher than the priority of the CG-UCI by default or the priority of the CG-UCI being higher than the priority of the HARQ feedback information by default.

In Implementation 3 of Case 2, the terminal obtains the eighth indication information and ninth indication information, where the eighth indication information indicates that a priority of the second information is the same as a priority of the HARQ feedback information, and the ninth indication information indicates that a priority of the CG-UCI is the same as the priority of the second information or indicates that a priority of the CG-UCI is the same as a priority of the first information. Further, the terminal generates a third UCI bit sequence based on the eighth indication information and the ninth indication information.

The eighth indication information and the ninth indication information may be carried in an RRC signaling message, or may be carried in a DCI message. This is not specifically limited in this application. It may be understood that, the eighth indication information and the ninth indication information may be carried in a same message or different messages. This is not specifically limited in this application.

For example, in Example 6, after the terminal establishes a communication connection to an access network device, if the access network device sends the eighth indication information and the ninth indication information to the terminal by using an RRC signaling message, the eighth indication information indicates that the priority index value of the second information is an index value 1, and the priority index value of the HARQ feedback information is an index value 1. If the ninth indication information indicates that a priority index value of the CG-UCI is 1, the ninth indication information indicates that the priority of the CG-UCI is the same as the priority of the second information. In this case, the terminal generates a third UCI bit sequence shown in FIG. 5b based on the priority of the second information being higher than the priority of the CG-UCI and the priority of the CG-UCI being higher than the priority of the HARQ feedback information by default.

With reference to Implementation 1 to Implementation 3 of Case 2, the terminal may further receive a second parameter from the access network device. The second parameter indicates that the CG-UCI and the HARQ feedback information are jointly encoded when a PUCCH resource in a PUCCH group overlaps a CG-PUSCH (which may be understood as that the UCI is multiplexed on the PUSCH). The second parameter may be carried in an RRC signaling message or a DCI message. When the CG-UCI and the HARQ feedback information are indicated to be jointly encoded, in a generated third UCI sequence, a last bit of the sixth bit sequence corresponding to the CG-UCI and a 1st bit of the first bit sequence corresponding to the HARQ feedback information are consecutive (that is, bit index values are consecutive). For example, q in Example 1 of Case 2 is equal to 0, and the third UCI bit sequence is

$$a_0^{(1)}, \dots, a_{O_{CG-UCI}}^{(1)} - 1, a_{O_{CG-UCI}}^{(1)}, \dots, a_{O_{CG-UCI+HARQ}}^{(1)} - 1$$ . The sixth bit sequence corresponding to the CG-UCI

includes $O^{CG\text{-}UCI}$ bits, and the sixth bit sequence is $a_0^{(1)}, \dots, a_{O_{CG-UCI}}^{(1)} - 1$. The first bit sequence corresponding to the HARQ feedback information includes $O^{HARQ}$ bits, and the first bit sequence is $a_{O_{CG-UCI}}^{(1)}, \dots, a_{O_{CG-UCI+HARQ}}^{(1)} - 1$.

With reference to Implementation 1 of Case 2, the terminal may further receive a first parameter from the access network device. The first parameter indicates that the second information and the HARQ feedback information are jointly encoded when a PUCCH resource in a PUCCH group overlaps a CG-PUSCH (which may be understood as that the UCI is multiplexed on the PUSCH). The first parameter may be carried in an RRC signaling message or a DCI message. When the second information and the HARQ feedback information are indicated to be jointly encoded, in a generated third UCI sequence, a last bit of the second bit sequence corresponding to the second information and a 1st bit of the first bit sequence corresponding to the HARQ feedback information are consecutive (that is, bit index values are consecutive).

For example, the terminal receives the first parameter and the second parameter from the access network device, that is, the CG-UCI, the HARQ feedback information, and the second information are jointly encoded. In Example 4, both t and q are equal to 0, and the third UCI bit sequence is $a_0, a_1, \dots, a_{O_{CGskip}} - 1, a_{O_{CGskip}}, a_{O_{CGskip}} + 1, \dots, a_{O_{CGskip+CG-UCI}} - 1, a_{O_{CGskip+CG-UCI}}, a_{O_{CGskip+CG-UCI}} + 1, \dots, a_{O_{CGskip+CG-UCI+HARQ}} - 1$. The second bit sequence corresponding to the second information includes $O^{CGskip}$ bits, and the second bit sequence is $a_0, a_1, \dots, a_{O_{CGskip}} - 1$. The sixth bit sequence corresponding to the CG-UCI includes $O^{CG\text{-}UCI}$ bits, and the sixth bit sequence is $a_{O_{CGskip}}, a_{O_{CGskip}} + 1, \dots, a_{O_{CGskip+CG-UCI}} - 1$. The first bit sequence corresponding to the HARQ feedback information includes $O^{HARQ}$ bits, and the first bit sequence is $a_{O_{CGskip+CG-UCI}}, a_{O_{CGskip+CG-UCI}} + 1, \dots, a_{O_{CGskip+CG-UCI+HARQ}} - 1$.

In a possible implementation of Case 2, when the second information further indicates the HARQ process, the second information and the CG-UCI may be same information. For example, an information element 1 is newly added to the CG-UCI, and the information element 1 indicates a PUSCH resource used or unused in the CG period.

Case 3: The UCI includes the second information, the HARQ feedback information, and third information, where the third information is CSI. In this case, the third UCI bit sequence includes the first bit sequence corresponding to the HARQ feedback information, the second bit sequence corresponding to the second information, and a third bit sequence corresponding to the CSI. Lengths of the first bit sequence, the second bit sequence, and the third bit sequence are all greater than or equal to 1.

In Implementation 1 of Case 3, the information in descending order of priorities is: the second information, the HARQ feedback information, and the CSI by default. Alternatively, it is understood as that the bit sequences in an order from front to back are: the second bit sequence, the first bit sequence, and the third bit sequence by default. Further, the terminal generates a third UCI bit sequence based on the priority of the second information being higher than the priority of the HARQ feedback information and the priority of the HARQ feedback information being higher than the priority of the CSI. The bit sequences in the third UCI bit sequence in an order from front to back are: the second bit sequence, the first bit sequence, and the third bit sequence.

For example, in Example 7, the terminal determines that the UCI to be sent includes the second information, the HARQ feedback information, and the CSI. The first bit sequence corresponding to the HARQ feedback information includes $O^{HARQ}$ bits, the second bit corresponding to the second information includes $O^{CGskip}$ bits, and the third bit sequence corresponding to the CSI includes $O^{CSI}$ bits. In this case, the terminal generates a third UCI bit sequence shown in FIG. 5c. The second bit sequence corresponding to the second information is $a_0, \dots, a_{O_{CGskip}} - 1$. The first bit sequence corresponding to the HARQ feedback information is $a_0^{(1)}, \dots, a_{O_{HARQ}}^{(1)} - 1$. The third bit sequence corresponding to the CSI is $a_0^{(2)}, \dots, a_{O_{CSI}}^{(2)} - 1$. The second bit sequence and the first bit sequence are separated by m bits, where m is an integer greater than or equal to 0. When m is equal to 0, a last bit of the second bit sequence and a 1st bit of the first bit sequence are consecutive (that is, bit index values are consecutive, and $a_0^{(1)}$ is $a_{OCGskip}$). The first bit sequence and the third bit sequence are separated by j bits, where j is an integer greater than or equal to 1.

In Implementation 2 of Case 3, the terminal obtains tenth indication information, where the tenth indication information indicates that a priority of the HARQ feedback information is higher than or the same as a priority of the CSI. Further, the terminal generates a third UCI bit sequence based on the tenth indication information. It should be noted that the priority of the CSI is the same as a priority of a PUSCH used for transmission of the CSI.

The tenth indication information may be carried in an RRC signaling message, or may be carried in a DCI message. This is not specifically limited in this application. It may be understood that, when the tenth indication information indicates that the priority of the HARQ feedback information is higher than the priority of the CSI, and Implementation 2 of Case 3 is implemented in combination with Implementation 3 of Case 1, the tenth indication information and the eighth indication information may be carried in a same message or different messages. This is not specifically limited in this application. When the tenth indication information indicates that the priority of the HARQ feedback information is the same as the priority of the CSI, and Implementation 2 of Case 3 is implemented in combination with Implementation 2 of Case 1, the tenth indication information and the seventh indication information may be carried in a same message or different messages. This is not specifically limited in this application.

For example, in Example 8, after the terminal establishes a communication connection to an access network device, if a priority index value of the PUSCH corresponding to the CSI is an index value 0, and the access network device sends the tenth indication information and the eighth indication information to the terminal by using an RRC signaling message, the tenth indication information indicates that a priority index value of the HARQ feedback information is an index value 1, and the eighth indication information indicates that the priority index value of the second information is an index value 1, that is, the tenth indication information indicates that the priority of the HARQ feedback information is higher than the priority of the CSI, and the eighth indication information indicates that the priority of the second information is the same as the priority of the HARQ feedback information. In this case, the terminal determines that the priority of the HARQ feedback information is higher than the priority of the CSI, and generates a third UCI bit sequence shown in FIG. 5c based on the priority of the second information being higher than the priority of the HARQ feedback information by default.

It should be noted that: 1. In the foregoing cases (namely, Case 1 to Case 3), unless otherwise specified or there is a logic conflict, terms and/or descriptions in implementations of different cases are consistent and may be mutually referenced, and technical features in different embodiments may be combined based on an internal logical relationship thereof, to form a new case. 2. In the foregoing cases, if any piece of information is not sent, a corresponding bit sequence in the third UCI is omitted. For example, in Case 2, if the terminal determines that the CG-UCI does not need to be sent, the terminal omits, in the third UCI bit sequence, a location of the sixth bit sequence corresponding to the CG-UCI, to generate the third UCI bit sequence shown in FIG. 5a. 3. The information mentioned in Case 1 to Case 3 is applicable to both a licensed frequency band and an unlicensed frequency band.

In S402, after generating the third UCI bit sequence, the terminal outputs the third UCI bit sequence to a next processing module, so that the next processing module processes the third UCI bit sequence, and sends a fourth UCI bit sequence obtained through final processing to the access network device.

In other words, after generating the third UCI bit sequence, a UCI bit sequence generation module of the terminal sends the third UCI bit sequence to a CRC adding module to add a CRC to the third UCI bit sequence; a channel coding module performs channel coding on the third UCI bit sequence processed by the CRC adding module; a modulation module modulates the third UCI bit sequence processed by the channel coding module; and a resource mapping module maps the third UCI bit sequence processed by the modulation module to a PUSCH resource, that is, sends the processed third UCI bit sequence (referred to as the fourth UCI bit sequence in this application) to the access network device by using the PUSCH resource. It may be understood that, when PUSCH resources are limited, the resource mapping module sequentially performs mapping based on an order of bit sequences in the third UCI bit sequence, and in this case, a bit sequence in the back of the third UCI bit sequence may not be sent to the access network device. In other words, when resources are limited, the access network device may receive a part of the processed third UCI bit sequence. Further, after receiving the fourth UCI bit sequence, the access network device performs inverse processing on the fourth UCI bit sequence. For example, after receiving the fourth UCI bit sequence, the access network device demodulates the fourth UCI bit sequence through a demodulation module, and then performs, through a CRC removal module, CRC removal processing on the fourth UCI bit sequence processed through the demodulation module.

It should be noted that: 1. The bit sequences in the third UCI bit sequence are processed to obtain bit sequences in the fourth UCI bit sequence. For example, the first bit sequence is processed to obtain a seventh bit sequence in the second UCI bit sequence, the second bit sequence is processed to obtain an eighth bit sequence in the second UCI bit sequence, and the sixth bit sequence is processed to obtain a twelfth bit sequence in the second UCI bit sequence. 2. When the CRC adding module adds a CRC to each bit sequence in the third UCI bit sequence, only one CRC is added to bit sequences on which joint encoding is performed, and each bit sequence on which independent encoding is performed (namely, a bit sequence on which joint encoding is not indicated to be performed) corresponds to one CRC. For example, in the third UCI bit sequence shown in FIG. 5b, if the first bit sequence, the second bit sequence, and the sixth bit sequence are jointly encoded, the first bit sequence, the second bit sequence, and the sixth bit sequence jointly correspond to one CRC.

In conclusion, when the UCI bit sequence is generated by using the method shown in FIG. 4, it can be ensured that the bit sequence corresponding to the second information is located first, so that when resources are limited, the bit sequence corresponding to the second information can be preferentially mapped to a transmission resource. This helps increase a probability of complete transmission of the second information, and increase resource utilization.

In a possible implementation, the terminal receives a third parameter from the access network device, where the third parameter indicates whether the UCI includes the second information (which may be understood as whether the UCI has a function of indicating a PUSCH resource used or unused in the CG period). If the third parameter is not configured (or is configured as 0), it indicates that the UCI does not include the second information; or if the third parameter is configured (or is configured as 1), it indicates that the UCI includes the second information. When the UCI includes the second information, the terminal may generate a first UCI bit sequence according to the methods for generating UCI provided in FIG. 2 and FIG. 4. When the UCI does not include the second information, it is considered that the first UCI bit sequence is generated based on a length of the second bit sequence being 0 (that is, a location of the second bit sequence being omitted in the first UCI bit sequence).

The third parameter may be understood as a parameter related to the second information, and the third parameter may be carried in an RRC configuration message, or may be carried in DCI. In a possible implementation, the third parameter is an expansion factor for sending the second information on the PUSCH (for example, the third parameter is betaoffsetCGskip-UCI). The third parameter is used to control a bit rate offset of the second information relative to uplink data (for example, as the third parameter increases, a bit rate of the second information is lower, reliability is better, and overheads occupied by the second information are higher). In another possible implementation, the third parameter is a parameter newly added to the RRC configuration message or the DCI (for example, the third parameter is referred to as cg-unusedpusch), and the third parameter indicates whether the second information exists.

The CG-UCI is usually used only in an unlicensed frequency band (which may be understood as that UCI generated in a licensed frequency band does not include the CG-UCI). Based on this, when the third parameter is configured, this application further provides two application scenarios: an application scenario 1 in which the second information can be used only in the licensed frequency band; and an application scenario 2 in which the second information can be used in both the licensed frequency band and the unlicensed frequency band. In a possible implementation, the terminal receives a fourth parameter from the access network device, where the fourth parameter indicates whether the second information can be used in the unlicensed frequency band (for example, the fourth parameter may be cg-retransmissionTimer). In a possible implementation, the fourth parameter is a parameter used in the unlicensed frequency band, and the fourth parameter is not configured (or does not exist) in the licensed frequency band. In other words, when the third parameter is configured (that is, the second information exists), but the fourth parameter is not configured in the unlicensed frequency band, the second information cannot be used in the unlicensed frequency band, and the second information can be used only in the licensed frequency band (corresponding to the application scenario 1); or when the third parameter is configured (that is, the second information exists), and the fourth parameter is configured in the unlicensed frequency band, the second information can be used in both the unlicensed frequency band and the licensed frequency band (corresponding to the application scenario 2).

The following describes an existence form of the second information with reference to the two application scenarios.

In the application scenario 1, the second information can be used only in the licensed frequency band. In this case, there is a form (1) in which the second information may be another piece of information other than the CG-UCI; there is a form (2) in which an indicator field is newly added to the CG-UCI, and the newly added indicator field indicates a PUSCH resource used or unused in the CG period, in other words, the newly added indicator field of the CG-UCI is used in the licensed frequency band to indicate a PUSCH resource used or unused in the CG period; or there is a form (3) in which an indicator field (for ease of description, collectively referred to as a multiplexed indicator field below) of the CG-UCI is multiplexed in the licensed frequency band to indicate a PUSCH resource used or unused in the CG period, where the multiplexed indicator field of the CG-UCI may be an indicator field indicating at least one of a HARQ process, a redundancy version, new data transmission or data retransmission, or channel occupancy time. In other words, when the multiplexed indicator field of the CG-UCI is used in the licensed frequency band, the multiplexed indicator field of the CG-UCI only indicates a PUSCH resource used or unused in the CG period. For example, when the multiplexed indicator field of the CG-UCI is an indicator field indicating a redundancy version, a function of the multiplexed indicator field in the licensed frequency band is to indicate a PUSCH resource used or unused in the CG period, and a function of the multiplexed indicator field in the unlicensed frequency band is to indicate a redundancy version.

For example, the CG-UCI used in the unlicensed frequency band includes an indicator field 1 to an indicator field 4. In the unlicensed frequency band, the indicator field 1 to the indicator field 4 of the CG-UCI respectively indicate a HARQ process, a redundancy version, new data transmission or data retransmission, or channel occupancy time. If the second information does not use the indicator field of the CG-UCI, the second information is another piece of information other than the CG-UCI (corresponding to the foregoing existence form (1)). If an indicator field 5 is added to the CG-UCI, and the indicator field 5 indicates, in the licensed frequency band, a PUSCH resource used or unused in the CG period, the second information includes the indicator field 5 of the CG-UCI (corresponding to the foregoing existence form (2)). If a function is added for the indicator field 4 of the CG-UCI, a function of the indicator field 4 in the licensed frequency band is different from an original function of the indicator field 4 in the unlicensed frequency band (namely, a function for indicating channel occupancy time), and the function of the indicator field 4 in the licensed frequency band is to indicate a PUSCH resource used or unused in the CG period, the second information includes the indicator field 4 of the CG-UCI (corresponding to the foregoing existence form (3)).

In the application scenario 2, the second information can be used in both the licensed frequency band and the unlicensed frequency band. In this case, there is a form (1) in which the second information may be another piece of information independent of the CG-UCI; or there is a form (2) in which an indicator field is newly added to the CG-UCI, where the newly added indicator field indicates a PUSCH resource used or unused in the CG period, in other words, the newly added indicator field of the CG-UCI may be used in both the unlicensed frequency band and the licensed frequency band to indicate a PUSCH resource used or unused in the CG period.

It should be noted that, in the foregoing existence form (2) or existence form (3), in addition to the indicator field indicating a PUSCH resource used or unused in the CG period, the second information may further include an indicator field that is in the CG-UCI and that indicates at least one of a HARQ process, a redundancy version, new data transmission or data retransmission, or channel occupancy time, or the second information may not include an indicator field that is in the CG-UCI and that indicates a HARQ process, a redundancy version, new data transmission or data retransmission, or channel occupancy time. This is not specifically limited in this application. When the second information further includes an indicator field that is in the CG-UCI and that indicates at least one of a HARQ process, a redundancy version, new data transmission or data retransmission, or channel occupancy time, the second information further indicates at least one of a HARQ process, a redundancy version, new data transmission or data retransmission, or channel occupancy time.

This application provides a communication apparatus. The communication apparatus may be configured to implement a function of the terminal or the access network device. The communication apparatus may be a terminal or an access network device. The communication apparatus includes a module or unit that is in one-to-one correspondence with the method/operation/step/action performed by the terminal or the access network device in the foregoing method embodiments. The unit may be implemented by a hardware circuit, software, or a communication of a hardware circuit and software. FIG. 6 is a diagram of a structure of a communication apparatus 600 according to an embodiment of this application. The communication apparatus 600 may include an interface module 601 and a processing module 602. Specifically, the processing module 602 is configured to process signaling and/or data. The signaling and/or data may be data received by the interface module 601, and processed signaling and/or data may also be sent by the interface module 601.

In an implementation, when the communication apparatus 600 is a terminal,
the processing module 602 is configured to generate a first UCI bit sequence, where the first UCI bit sequence includes a first bit sequence and a second bit sequence; the first bit sequence corresponds to first information, and the first information is hybrid automatic repeat request HARQ feedback information; the second bit sequence corresponds to second information, and the second information indicates a physical uplink shared channel PUSCH resource used or unused in a configured grant CG period; and the first bit sequence is prior to the second bit sequence, a length of the first bit sequence is greater than or equal to 1, and a length of the second bit sequence is greater than or equal to 1.

The interface module 601 is configured to output the first UCI bit sequence.

In a possible implementation, the interface module 601 is further configured to obtain first indication information, where the first indication information indicates that a priority of the second information is lower than a priority of the first information.

In a possible implementation, the interface module 601 is further configured to obtain second indication information, where the second indication information indicates that a priority of the second information is the same as a priority of the first information.

In a possible implementation, the first UCI bit sequence further includes a third bit sequence, the third bit sequence corresponds to third information, the third information is channel state information CSI, and a length of the third bit sequence is greater than or equal to 1.

In a possible implementation, the second bit sequence is prior to the third bit sequence.

In a possible implementation, the interface module 601 is further configured to obtain third indication information, where the third indication information indicates that the priority of the second information is higher than a priority of the third information.

In a possible implementation, the second bit sequence is posterior to the third bit sequence.

In a possible implementation, the interface module 601 is further configured to obtain fourth indication information, where the fourth indication information indicates that the priority of the second information is lower than a priority of the third information.

In a possible implementation, the interface module 601 is further configured to obtain fifth indication information, where the fifth indication information indicates that the priority of the second information is the same as a priority of the third information.

In a possible implementation, the third bit sequence includes a fourth bit sequence and a fifth bit sequence, where the fourth bit sequence corresponds to fourth information, the fourth information is first part CSI, the fifth bit sequence corresponds to fifth information, and the fifth information is second part CSI. The second bit sequence is prior to the fifth bit sequence, the second bit sequence is posterior to the fourth bit sequence, a length of the fourth bit sequence is greater than or equal to 1, and a length of the fifth bit sequence is greater than or equal to 1.

In a possible implementation, the first UCI bit sequence further includes a sixth bit sequence, the sixth bit sequence corresponds to sixth information, the sixth information indicates a HARQ process, and a length of the sixth bit sequence is greater than or equal to 1.

In a possible implementation, the first bit sequence is posterior to the sixth bit sequence.

For specific implementations of the interface module 601 and the processing module 602, refer to specific implementation steps by the terminal in FIG. 2. Details are not described herein again.

In an implementation, for specific implementations of the interface module 601 and the processing module 602, refer to specific implementation steps by the terminal in FIG. 4. Details are not described herein again.

In an implementation, when the communication apparatus shown in FIG. 6 is an access network device,

the interface module 601 is configured to obtain a second UCI bit sequence, where the second UCI bit sequence includes a seventh bit sequence and an eighth bit sequence; the seventh bit sequence corresponds to first information, and the first information is hybrid automatic repeat request HARQ feedback information; the eighth bit sequence corresponds to second information, and the second information indicates a physical uplink shared channel PUSCH resource used or unused in a configured grant CG period; and the seventh bit sequence is prior to the eighth bit sequence, a length of the seventh bit sequence is greater than or equal to 1, and a length of the second bit sequence is greater than or equal to 1.

In a possible implementation, the interface module 601 is further configured to send first indication information, where the first indication information indicates that a priority of the second information is lower than a priority of the first information.

In a possible implementation, the interface module 601 is further configured to send second indication information, where the second indication information indicates that a priority of the second information is the same as a priority of the first information. The bit sequence corresponds to third information, the third information is channel state information CSI, and a length of the ninth bit sequence is greater than or equal to 1.

In a possible implementation, the eighth bit sequence is prior to the ninth bit sequence.

In a possible implementation, the interface module 601 is further configured to send third indication information, where the third indication information indicates that the priority of the second information is higher than a priority of the third information.

In a possible implementation, the eighth bit sequence is posterior to the ninth bit sequence.

In a possible implementation, the interface module 601 is further configured to send fourth indication information, where the fourth indication information indicates that the priority of the second information is lower than a priority of the third information.

In a possible implementation, the interface module 601 is further configured to send fifth indication information, where the fifth indication information indicates that the priority of the second information is the same as a priority of the third information.

In a possible implementation, the ninth bit sequence includes a tenth bit sequence and an eleventh bit sequence, where the tenth bit sequence corresponds to fourth information, the fourth information is first part CSI (namely, a CSI part 1), the eleventh bit sequence corresponds to fifth information, and the fifth information is second part CSI (namely, a CSI part 2). In this case, the eighth bit sequence is prior to the eleventh bit sequence, the eighth bit sequence is posterior to the tenth bit sequence, a length of the tenth bit sequence is greater than or equal to 1, and a length of the eleventh bit sequence is greater than or equal to 1.

In a possible implementation, the first UCI bit sequence further includes a twelfth bit sequence, the twelfth bit sequence corresponds to sixth information, the sixth information indicates a HARQ process, and a length of the twelfth bit sequence is greater than or equal to 1.

In a possible implementation, the seventh bit sequence is posterior to the twelfth bit sequence.

For a specific implementation of the interface module 601, refer to a specific implementation step by the access network device in FIG. 2. Details are not described herein again.

In an implementation, for specific implementations of the interface module 601 and the processing module 602, refer to specific implementation steps by the access network device in FIG. 4. Details are not described herein again.

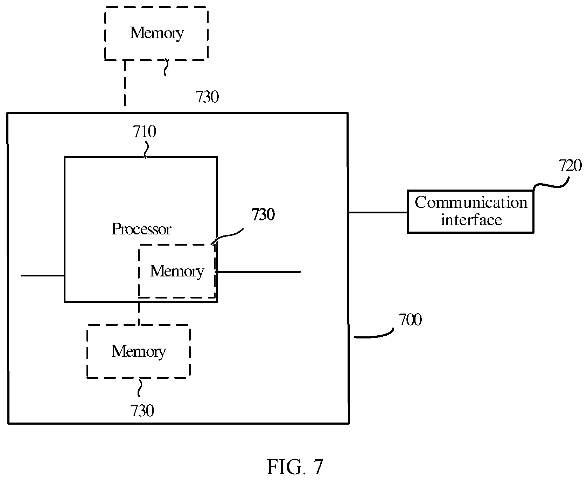

FIG. 7 shows a communication apparatus 700 according to an embodiment of this application. The communication apparatus 700 is configured to implement a function of terminal or the access network device. The apparatus may be a communication device or an apparatus used in the communication device, and the communication device may be a terminal or an access network device. The apparatus used in the communication device may be a chip system or a chip in the communication device. The chip system may include a chip, or may include a chip and another discrete device.

The communication apparatus 700 includes at least one processor 710, configured to implement a processing function of a device (for example, the access network device or the terminal) in the methods provided in embodiments of this application. The communication apparatus 700 may further include a communication interface 720, configured to implement receiving and sending operations of a device (for example, the access network device or the terminal) in the methods provided in embodiments of this application. In this embodiment of this application, the communication interface may be a transceiver, a circuit, a bus, a module, or another type of communication interface, and is configured to communicate with another device by using a transmission medium. For example, the communication interface 720 is used by an apparatus in the communication apparatus 700 to communicate with another device. The processor 710 receives and sends data through the communication interface 720, and is configured to implement the methods in the foregoing method embodiments.

The communication apparatus 700 may further include at least one memory 730, configured to store program instructions and/or data. The memory 730 is coupled to the processor 710. The coupling in this embodiment of this application may be an indirect coupling or a communication connection between apparatuses, units, or modules in an electrical form, a mechanical form, or another form, and is used for information exchange between the apparatuses, the units, or the modules. The processor 710 may cooperate with the memory 730. The processor 710 may execute the program instructions stored in the memory 730. At least one of the at least one memory may be included in the processor.

A specific connection medium between the communication interface 720, the processor 710, and the memory 730 is not limited in this embodiment of this application. In this embodiment of this application, in FIG. 7, the memory 730, the processor 710, and the communication interface 720 are connected through a bus. The bus is represented by using a bold line in FIG. 7. A connection manner between other components is described merely as an example and does not constitute a limitation. The bus may be classified into an address bus, a data bus, a control bus, and the like. For ease of representation, only one bold line is used to represent the bus in FIG. 7, but this does not mean that there is only one bus or only one type of bus.

When the communication apparatus 700 is specifically an apparatus used for a device (for example, the access network device or the terminal), for example, when the communication apparatus 700 is specifically a chip or a chip system, the communication interface 720 may output or receive a baseband signal. When the communication apparatus 700 is specifically a device (for example, the access network device or the terminal), the communication interface 720 may output or receive a radio frequency signal. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

It should be noted that the communication interface 720 may be configured to perform a function of the interface module 601, and the processor 710 may be configured to perform a function of the processing module 602. Details are not described herein again.

When the communication apparatus is a chip used in the terminal, the chip in the terminal implements a function of the terminal in the foregoing method embodiments, and the chip in the terminal receives information from another network element; or the chip in the terminal sends information to another network element.

When the communication apparatus is a chip used in an access network device, the chip in the access network device implements a function of the access network device in the foregoing method embodiments. The chip in the access network device receives information from another network element, or the chip in the access network device sends information to another network element.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware device, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in the ASIC. In addition, the ASIC may be located in the access network device or the terminal. Certainly, the processor and the storage medium may alternatively exist in the terminal or the access network device as discrete components.

All or some of the foregoing embodiments may be implemented by software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or another programmable apparatus. The computer programs or the instructions may be stored in a computer-readable storage medium, or transmission of the computer programs or the instructions may be performed by using the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; may be an optical medium, for example, a DVD; or may be a semiconductor medium, for example, a solid-state disk (solid-state disk, SSD).

In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are unused to limit the scope of embodiments of this application. Sequence numbers of the foregoing processes do not mean an execution sequence, and the execution sequence of the processes should be determined based on functions and internal logic of the processes.

An embodiment of this application further provides a computer-readable storage medium. The computer-readable storage medium stores computer-executable instructions, and when the computer-executable instructions are executed, the methods performed by the terminal or the access network device in the foregoing method embodiments are implemented.

An embodiment of this application further provides a computer program product. The computer program product includes a computer program, and when the computer program is executed, the methods performed by the terminal or the access network device in the foregoing method embodiments are implemented.

An embodiment of this application further provides a communication system. The communication system includes a terminal or an access network device. The terminal is configured to perform the method performed by the terminal in the foregoing method embodiments. The access network device is configured to perform the method performed by the access network device in the foregoing method embodiments.

It should be noted that, for brief description, the foregoing method embodiments are represented as a series of actions. However, a person skilled in the art should appreciate that this application is not limited to the described sequence of the actions, because according to this application, some steps may be performed in other sequences or simultaneously. It should be further appreciated by a person skilled in the art that embodiments described in this specification all belong to example embodiments, and the involved actions and modules are not necessarily required by this application.

The descriptions of embodiments provided in this application may refer to each other, and the descriptions of embodiments have different focuses. For a part not described in detail in an embodiment, refer to the related descriptions in another embodiment. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended to describe the technical solutions of this application, rather than limit this application. Although this application is described in detail with reference to the foregoing embodiments, a person of ordinary skill in the art should understand that modifications can still be made to the technical solutions described in the foregoing embodiments or make equivalent replacements to some or all technical features thereof, without departing from the scope of the technical solutions of embodiments of this application.

**Claims**

1.　A method for generating uplink control information UCI, wherein the method comprises:

generating a first UCI bit sequence, wherein

the first UCI bit sequence comprises a first bit sequence and a second bit sequence; the first bit sequence corresponds to first information, and the first information is hybrid automatic repeat request HARQ feedback information; the second bit sequence corresponds to second information, and the second information indicates a physical uplink shared channel PUSCH resource used or unused in a configured grant CG period; and the first bit sequence is prior to the second bit sequence, a length of the first bit sequence is greater than or equal to 1, and a length of the second bit sequence is greater than or equal to 1; and

outputting the first UCI bit sequence.

2. The method according to claim 1, wherein the method further comprises:
obtaining first indication information, wherein the first indication information indicates that a priority of the second information is lower than a priority of the first information.

3. The method according to claim 1, wherein the method further comprises:
obtaining second indication information, wherein the second indication information indicates that a priority of the second information is the same as a priority of the first information.

4. The method according to any one of claims 1 to 3, wherein the first UCI bit sequence further comprises a third bit sequence, the third bit sequence corresponds to third information, the third information is channel state information CSI, and a length of the third bit sequence is greater than or equal to 1.

5. The method according to claim 4, wherein the second bit sequence is prior to the third bit sequence.

6. The method according to claim 5, wherein the method further comprises:
obtaining third indication information, wherein the third indication information indicates that the priority of the second information is higher than a priority of the third information.

7. The method according to claim 4, wherein the second bit sequence is posterior to the third bit sequence.

8. The method according to claim 7, wherein the method further comprises:
obtaining fourth indication information, wherein the fourth indication information indicates that the priority of the second information is lower than a priority of the third information.

9. The method according to claim 5 or 7, wherein the method further comprises:
obtaining fifth indication information, wherein the fifth indication information indicates that the priority of the second information is the same as a priority of the third information.

10. The method according to claim 4, wherein the third bit sequence comprises a fourth bit sequence and a fifth bit sequence, the fourth bit sequence corresponds to fourth information, the fourth information is first part CSI, the fifth bit sequence corresponds to fifth information, and the fifth information is second part CSI; and
the second bit sequence is prior to the fifth bit sequence, the second bit sequence is posterior to the fourth bit sequence, a length of the fourth bit sequence is greater than or equal to 1, and a length of the fifth bit sequence is greater than or equal to 1.

11. The method according to any one of claims 1 to 10, wherein the first UCI bit sequence further comprises a sixth bit sequence, the sixth bit sequence corresponds to sixth information, the sixth information indicates a HARQ process, and a length of the sixth bit sequence is greater than or equal to 1.

12. The method according to claim 11, wherein the first bit sequence is posterior to the sixth bit sequence.

13. A communication apparatus, wherein the communication apparatus comprises:

a processing module, configured to generate a first UCI bit sequence, wherein

the first UCI bit sequence comprises a first bit sequence and a second bit sequence; the first bit sequence corresponds to first information, and the first information is hybrid automatic repeat request HARQ feedback information; the second bit sequence corresponds to second information, and the second information indicates a physical uplink shared channel PUSCH resource used or unused in a configured grant CG period; and the first bit sequence is prior to the second bit sequence, a length of the first bit sequence is greater than or equal to 1, and a length of the second bit sequence is greater than or equal to 1; and
an interface module, configured to output the first UCI bit sequence.

14. The apparatus according to claim 13, wherein
the interface module is further configured to obtain first indication information, wherein the first indication information indicates that a priority of the second information is lower than a priority of the first information.

15. The apparatus according to claim 13, wherein
the interface module is further configured to obtain second indication information, wherein the second indication information indicates that a priority of the second information is the same as a priority of the first information.

16. The apparatus according to any one of claims 13 to 15, wherein the first UCI bit sequence further comprises a third bit sequence, the third bit sequence corresponds to third information, the third information is channel state information CSI, and a length of the third bit sequence is greater than or equal to 1.

17. The apparatus according to claim 16, wherein the second bit sequence is prior to the third bit sequence.

18. The apparatus according to claim 17, wherein
the interface module is further configured to obtain third indication information, wherein the third indication information indicates that the priority of the second information is higher than a priority of the third information.

19. The apparatus according to claim 16, wherein the second bit sequence is posterior to the third bit sequence.

20. The apparatus according to claim 19, wherein
the interface module is further configured to obtain fourth indication information, wherein the fourth indication information indicates that the priority of the second information is lower than a priority of the third information.

21. The apparatus according to claim 17 or 19, wherein
the interface module is further configured to obtain fifth indication information, wherein the fifth indication information indicates that the priority of the second information is the same as a priority of the third information.

22. The apparatus according to claim 16, wherein the third bit sequence comprises a fourth bit sequence and a fifth bit sequence, the fourth bit sequence corresponds to fourth information, the fourth information is first part CSI, the fifth bit sequence corresponds to fifth information, and the fifth information is second part CSI; and
the second bit sequence is prior to the fifth bit sequence, the second bit sequence is posterior to the fourth bit sequence, a length of the fourth bit sequence is greater than or equal to 1, and a length of the fifth bit sequence is greater than or equal to 1.

23. The apparatus according to any one of claims 13 to 22, wherein the first UCI bit sequence further comprises a sixth bit sequence, the sixth bit sequence corresponds to sixth information, the sixth information indicates a HARQ process, and a length of the sixth bit sequence is greater than or equal to 1.

24. The apparatus according to claim 23, wherein the first bit sequence is posterior to the sixth bit sequence.

25. A method for generating uplink control information UCI, wherein the method comprises:

generating a third UCI bit sequence, wherein
the third UCI bit sequence comprises a first bit sequence and a second bit sequence; the first bit sequence corresponds to first information, and the first information is hybrid automatic repeat request HARQ feedback information; the second bit sequence corresponds to second information, and the second information indicates a physical uplink shared channel PUSCH resource used or unused in a configured grant CG period; and the second bit sequence is prior to the first bit sequence, a length of the first bit sequence is greater than or equal to 1, and a length of the second bit sequence is greater than or equal to 1; and
outputting the third UCI bit sequence.

26. The method according to claim 25, wherein a priority of the second information is the same as a priority of the first information.

**27.** The method according to claim 26, wherein the method further comprises:
obtaining eighth indication information, wherein the eighth indication information indicates that the priority of the second information is the same as the priority of the first information.

**28.** The method according to any one of claims 25 to 27, wherein the third UCI bit sequence further comprises a third bit sequence, the third bit sequence corresponds to third information, the third information is channel state information CSI, and a length of the third bit sequence is greater than or equal to 1.

**29.** The method according to claim 28, wherein the first bit sequence is prior to the third bit sequence.

**30.** The method according to claim 28 or 29, wherein the method further comprises:

obtaining tenth indication information, wherein the tenth indication information indicates that the priority of the first information is higher than a priority of the third information; or
the tenth indication information indicates that the priority of the first information is the same as a priority of the third information.

**31.** A communication apparatus, wherein the communication apparatus comprises:

a processing module, configured to generate a third UCI bit sequence, wherein
the third UCI bit sequence comprises a first bit sequence and a second bit sequence; the first bit sequence corresponds to first information, and the first information is hybrid automatic repeat request HARQ feedback information; the second bit sequence corresponds to second information, and the second information indicates a physical uplink shared channel PUSCH resource used or unused in a configured grant CG period; and the second bit sequence is prior to the first bit sequence, a length of the first bit sequence is greater than or equal to 1, and a length of the second bit sequence is greater than or equal to 1; and
an interface module, configured to output the third UCI bit sequence.

**32.** The apparatus according to claim 31, wherein a priority of the second information is the same as a priority of the first information.

**33.** The apparatus according to claim 32, wherein the interface module is further configured to obtain eighth indication information, wherein the eighth indication information indicates that the priority of the second information is the same as the priority of the first information.

**34.** The apparatus according to any one of claims 31 to 33, wherein the third UCI bit sequence further comprises a third bit sequence, the third bit sequence corresponds to third information, the third information is channel state information CSI, and a length of the third bit sequence is greater than or equal to 1.

**35.** The apparatus according to claim 34, wherein the first bit sequence is prior to the third bit sequence.

**36.** The apparatus according to claim 34 or 35, wherein the interface module is further configured to obtain tenth indication information, wherein

the tenth indication information indicates that the priority of the first information is higher than a priority of the third information; or
the tenth indication information indicates that the priority of the first information is the same as a priority of the third information.

**37.** A communication apparatus, comprising a processor, wherein the processor is coupled to a memory, the memory is configured to store a program or instructions, and when the program or the instructions are executed by the processor, the apparatus is caused to perform the method according to any one of claims 1 to 12, or the apparatus is caused to perform the method according to any one of claims 25 to 30.

**38.** A computer-readable storage medium, wherein the storage medium stores a computer program or instructions, and when the computer program or the instructions are executed, the method according to any one of claims 1 to 12 or the method according to any one of claims 25 to 30 is implemented.

**39.** A computer program product, comprising computer program code, wherein when the computer program code is run, the method according to any one of claims 1 to 12 or the method according to any one of claims 25 to 30 is implemented.

**40.** A communication apparatus, comprising a module configured to perform the method according to any one of claims 1 to 12 or the method according to any one of claims 25 to 30.

FIG. 1

FIG. 2

$a_0$ ... $a_O^{HARQ}-1$ $a^{(1)}_0$ ... $a^{(1)}_O{}^{CGskip}-1$

m bits

First UCI bit sequence:

First bit sequence

Second bit sequence

FIG. 3a

$a_0$ ... $a_O^{HARQ}-1$ $a^{(1)}_0$ ... $a^{(1)}_O{}^{CGskip}-1$ $a^{(2)}_0$ ... $a^{(2)}_O{}^{CSI}-1$

m bits      j bits

First UCI bit sequence:

First bit sequence

Second bit sequence

Third bit sequence

FIG. 3b

$a_0$ ... $a_O^{HARQ}-1$ ... $a^{(1)}_0$ ... $a^{(1)}_O{}^{CSI}-1$ ... $a^{(2)}_0$ ... $a^{(2)}_O{}^{CGskip}-1$

n bits      j bits

First UCI bit sequence:

First bit sequence

Third bit sequence

Second bit sequence

FIG. 3c

$a_0$ ... $a_O^{HARQ}-1$ $a^{(1)}_0$ $a^{(1)}_O{}^{CSI\,part\,1}-1$ $a^{(2)}_0$ ... $a^{(2)}_O{}^{CGskip}-1$ $a^{(3)}_0$ $a^{(3)}_O{}^{CSI\,part\,2}-1$

n bits    j bits    i bits

First UCI bit sequence:

First bit sequence

Fourth bit sequence

Second bit sequence

Fifth bit sequence

FIG. 3d

$a_0$ ... $a_O^{CG-UCI}-1$ ... $a^{(1)}_0$ ... $a^{(1)}_O{}^{HARQ}-1$ $a^{(2)}_0$ ... $a^{(2)}_O{}^{CGskip}-1$

q bits      m bits

First UCI bit sequence:

Sixth bit sequence

First bit sequence

Second bit sequence

FIG. 3e

$a_0 \quad \ldots \quad a_O^{CG\text{-}UCI}{-}1 \quad a^{(1)}{}_0 \quad \ldots \quad a^{(1)}{}_O^{HARQ}{-}1 \quad a^{(2)}{}_0 \ldots a^{(2)}{}_O^{CGskip}{-}1 \; a^{(3)}{}_0 \quad a^{(3)}{}_O^{CSI}{-}1$

First UCI bit sequence:

q bits    m bits    j bits

Sixth bit sequence    First bit sequence    Second bit sequence    Third bit sequence

**FIG. 3f**

| Terminal | Access network device |
|---|---|

S401: Generate a third UCI bit sequence

S402

Process the third UCI bit sequence to obtain a fourth UCI bit sequence

Fourth UCI bit sequence →

**FIG. 4**

$a_0 \quad \ldots \quad a_O^{CGskip}{-}1 \quad a^{(1)}{}_0 \quad \ldots \quad a^{(1)}{}_O^{HARQ}{-}1$

Third UCI bit sequence:

t bits

Second bit sequence    First bit sequence

**FIG. 5a**

$a_0 \quad \ldots \quad a_O^{CGskip}-1 \ldots \quad a^{(1)}_0 \quad \ldots \quad a^{(1)}_O{}^{CG\text{-}UCI}-1 \; a^{(2)}_0 \quad \ldots a^{(2)}_O{}^{HARQ}-1$

Third UCI bit sequence:

h bits     q bits

Second bit sequence     Sixth bit sequence     First bit sequence

**FIG. 5b**

$a_0 \quad \ldots \quad a_O^{CGskip}-1 \ldots \quad a^{(1)}_0 \quad \ldots \quad a^{(1)}_O{}^{HARQ}-1 \; a^{(2)}_0 \quad \ldots \quad a^{(2)}_O{}^{CSI}-1$

Third UCI bit sequence:

m bits     j bits

Second bit sequence     First bit sequence     Third bit sequence

**FIG. 5c**

Interface module    601

Processing module    602

Communication apparatus 600

**FIG. 6**

Memory

730

710

Processor

730

Memory

720

Communication
interface

700

Memory

730

FIG. 7

## INTERNATIONAL SEARCH REPORT

| International application No. |
|---|
| **PCT/CN2024/077792** |

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, VEN, CNTXT, ENTXTC: 复用, 混合自动重传, 没使用, 未使用, 物理上行共享信道, 优先级, 上行控制信息, 配置授权, 信道状态信息, multiplex, HARQ, unused, PUSCH, prior+, UCI, CG, CSI

**C. DOCUMENTS CONSIDERED TO BE RELEVANT**

| Category* | Citation of document, with indication, where appropriate, of the relevant passages | Relevant to claim No. |
|---|---|---|
| X | NTT DOCOMO, INC. "Discussion on XR specific capacity improvement enhancements" *3GPP TSG RAN WG1 #112, R1-2301511*, 17 February 2023 (2023-02-17), section 2.2 | 1-40 |
| X | INTEL CORP. "Discussion on XR capacity enhancement techniques" *3GPP TSG RAN WG1 Meeting #112, R1-2300965*, 18 February 2023 (2023-02-18), section 2 | 1-40 |
| X | ERICSSON. "Capacity Enhancements for XR" *3GPP TSG-RAN WG1 Meeting #112, R1-2300137*, 17 February 2023 (2023-02-17), section 2.2.3 | 1-40 |
| A | CN 113455082 A (QUALCOMM INC.) 28 September 2021 (2021-09-28) entire document | 1-40 |
| A | WO 2022233214 A1 (HUAWEI TECHNOLOGIES CO., LTD.) 10 November 2022 (2022-11-10) entire document | 1-40 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 March 2024** | **29 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/077792** |

**C.    DOCUMENTS CONSIDERED TO BE RELEVANT**

| Category* | Citation of document, with indication, where appropriate, of the relevant passages | Relevant to claim No. |
| --- | --- | --- |
| A | SAMSUNG. "Capacity Improvements for XR"<br>*3GPP TSG RAN WG1 #112, R1-2301282,* 17 February 2023 (2023-02-17),<br>    entire document | 1-40 |
| A | 3GPP. "3rd Generation Partnership Project; Technical Specification Group Radio Access Network; NR; Multiplexing and channel coding (Release 17)"<br>*3GPP TS 38.212 V17.4.0 (2022-12),* 04 January 2023 (2023-01-04),<br>    section 6.3.1.1 | 1-40 |

Form PCT/ISA/210 (second sheet) (July 2022)

**INTERNATIONAL SEARCH REPORT**
Information on patent family members

| International application No. |
| --- |
| **PCT/CN2024/077792** |

| Patent document cited in search report | | | Publication date (day/month/year) | Patent family member(s) | | | Publication date (day/month/year) |
| --- | --- | --- | --- | --- | --- | --- | --- |
| CN | 113455082 | A | 28 September 2021 | EP | 3932135 | A1 | 05 January 2022 |
| | | | | WO | 2020176546 | A1 | 03 September 2020 |
| | | | | US | 2020275476 | A1 | 27 August 2020 |
| | | | | US | 11240839 | B2 | 01 February 2022 |
| WO | 2022233214 | A1 | 10 November 2022 | CN | 115314172 | A | 08 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310196614
- CN 202310379808
- CN 202310521949